(19) Europäisches Patentamt
European Patent Office
Office européen des brevets

(11) **EP 4 142 505 B1**

(12) **EUROPEAN PATENT SPECIFICATION**

(45) Date of publication and mention
of the grant of the patent:
**28.02.2024  Bulletin 2024/09**

(21) Application number: **21721114.3**

(22) Date of filing: **27.04.2021**

(51) International Patent Classification (IPC):
***A23F 5/04*** (2006.01)          ***A23N 12/08*** (2006.01)
***A23N 12/12*** (2006.01)

(52) Cooperative Patent Classification (CPC):
**A23N 12/08; A23F 5/04; A23N 12/125**

(86) International application number:
**PCT/EP2021/061007**

(87) International publication number:
**WO 2021/219652 (04.11.2021 Gazette 2021/44)**

(54) **SYSTEM FOR CALIBRATION OF ROASTING APPARATUSES**

SYSTEM ZUR KALIBRIERUNG VON RÖSTAPPARATEN

SYSTÈME D'ÉTALONNAGE D'APPAREILS DE TORRÉFACTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **27.04.2020  EP 20171668**

(43) Date of publication of application:
**08.03.2023  Bulletin 2023/10**

(73) Proprietor: **Société des Produits Nestlé S.A.
1800 Vevey (CH)**

(72) Inventors:
  • **DUBIEF, Flavien, Florent
    1424 Champagne (CH)**
  • **BIGLER, Nicolas
    1054 Morrens (CH)**
  • **PINDJUROV, Riste
    1740 Neyruz (CH)**
  • **MARTIN, Vincent
    1350 Orbe (CH)**

(74) Representative: **Ducreux, Marie
    Société des Produits Nestlé S.A.
    Avenue Nestlé 55
    1800 Vevey (CH)**

(56) References cited:
**WO-A1-2018/053436      US-A1- 2004 142 078
US-A1- 2006 266 229      US-A1- 2016 016 181
US-B2- 6 770 315**

**Description**

**Field of the invention**

The present invention relates to coffee beans roasting apparatuses and devices to calibrate such apparatuses.

**Background of the invention**

The roasting of coffee beans consists in introducing coffee beans in a roasting chamber and applying heating to said beans.

Generally, the roasting apparatus comprises a chamber to contain coffee beans, a heating device to heat air supplied to the chamber, a temperature probe to regulate the temperature supplied by the heating device and a controller which is in operative communication with the temperature probe and the heating device. The controller operates to activate and deactivate the heating device. The controller has stored therein, a predefined roast profile, which comprises a plurality of data points corresponding to a particular time and temperature. The controller operates on a periodic basis to read a roast control signal value, correlate that roast control signal value with the roast profile, and control the operation of the heating device so as to maintain the temperature of the coffee beans in accordance with the roast profile.

This predefined roast profile is usually defined for a particular type of coffee beans and by a coffee expert. The roast profile is defined to provide the optimal roasting of this type of coffee beans and reproducing this roast profile is a guarantee of not wasting beans.

In order to reproduce this roast profile, it is essential that the roasting apparatus is able to apply exactly the required temperature of the roast profile. This is usually obtained by regulating the temperature inside the roasting chamber itself that is inside the bed of coffee beans. For example, US6053093 provides a roasting apparatus with thermosensors immersed inside the roasting chamber. US-2006/0266229 discloses an automated coffee roasting system, which comprises means for calibration and set-up of the system.

Yet, depending on the type of roasting apparatus, it is not always desired or possible to introduce a temperature sensor inside the roasting chamber to measure temperature inside the bed of coffee beans.

First, it is not desirable to have a temperature sensor inside the chamber and the bed of coffee beans because this sensor can rapidly get dirty and provide erroneous measures or require frequent cleaning or maintenance operations. And, if the temperature sensor is positioned in a part of the chamber where it can be protected from dirtiness, that is away from direct contact with beans, the measures are less reliable. Other sensors can be present at the outlet of the chamber yet still outside the chamber like in WO2018021081 or US6770315.

Secondly, in some apparatuses, it is difficult to provide such an inside temperature sensor, in particular in a chamber that has to be removed from the apparatus for the operation of introducing and emptying the beans. Since the temperature needs to be connected to the processing unit of the apparatus, each roasting operation would require the disconnection of the sensor. Unplugging the temperature sensor at each roasting operation would be complex or introduce fragility in the apparatus. In this type of apparatus, it is preferred to regulate the temperature with at least one fixed sensor localised outside the chamber, preferably close to the heating device, that is close to the inlet of hot air inside the chamber.

With this type of roasting apparatus comprising a temperature probe outside the roasting chamber, for each type of beans, a specific roasting profile is defined with a master apparatus. This specific roasting profile defined with the master apparatus corresponds to the temperature of the hot air provided by a heating device and regulated by said at least one temperature probe positioned outside the chamber.

When a series of identical roasting apparatus are manufactured, it has been observed that, even by operating the heating device of each apparatus in order to apply the same roasting profile as defined with the master apparatus based on the regulating of temperature measured with a correctly calibrated temperature probe, roasting the same beans in identical apparatuses was not always consistent : the colour and the aroma of the coffee beans differed. The lack of consistency in reproducing similar roasting profile happened between the new manufactured roasting apparatuses and the master apparatus but also between two roasting apparatuses of the same series.

An object of the present invention is to provide a solution to this problem of consistently roasting the same roasting profile in different roasting apparatuses.

It would be advantageous to provide a solution to measure the temperature felt by the beans in each roasting apparatus in order to verify that the roasting applied to the beans is similar in different roasting apparatuses.

It would be advantageous to provide a solution to measure the temperature felt by the beans in each roasting apparatus without having to introduce beans inside the roasting apparatus

## Summary of the invention

In a first aspect of the invention, there is provided a coffee beans roasting system comprising

- a coffee beans roasting apparatus, said apparatus comprising :

  . a dedicated roasting chamber to contain coffee beans,
  . a heating device to supply a flow of hot air to the chamber,
  . at least one first temperature probe to regulate the temperature of air supplied by the heating device, said first temperature probe being positioned outside the chamber,
  . a control system configured to control the heating device and configured to reproduce roasting curves each of said roasting curves providing a set of points (T@ti ; ti) representing the temperature to be applied at discrete successive times ti, respectively, said control of the heating device being based on the temperature Treg regulated by the at least one first temperature probe,
  and

- at least one second temperature probe configured to be introduced temporary inside the roasting apparatus to measure the temperature inside the roasting chamber, and

- a means to simulate temporary the presence of coffee beans inside the chamber during a roasting operation and configured to create a pressure loss of the flow of hot air while the chamber is void of coffee beans.

The system comprises first a coffee beans roasting apparatus comprising at least : a chamber to contain coffee beans and dedicated to roasting, a heating device, at least one first temperature probe to regulate the temperature supplied by the heating device and positioned outside the chamber and a control system.

This roasting apparatus is such that it does not comprise any probe inside the chamber during the operation of roasting coffee beans, in particular any probe configured to measure temperature inside the chamber to provide temperature as an input in a regulation feedback loop. In certain embodiments of the system, the roasting apparatus can comprise a measuring probe inside the roasting chamber but during an operation of calibration only.

The chamber is designed to contain coffee beans during the roasting operation. In the chamber, coffee beans are heated and preferably mixed to homogenise heating through the beans.

Mixing can be obtained with a fluidic bed of hot air or mechanically with stirring blades or through rotation of a rotating drum.

Preferably the roasting apparatus is hot air fluid bed chamber. Within such a chamber, heated air is forced through a screen or a perforated plate under the coffee beans with sufficient force to lift the beans. Heat is transferred to the beans as they tumble and circulate within this fluidized bed.

Alternatively the roasting apparatus can be a drum chamber wherein the coffee beans are tumbled in a heated environment. The drum chamber can consist of a drum rotating along a horizontal axis or the drum chamber can comprise stirring blades to tumble the coffee beans in a heated environment.

The chamber usually comprises an outlet from which smoke produced during the roasting operation can be evacuated.

The heating device heats air supplied to the chamber in order to heat coffee beans contained in the chamber Preferably, the heating device is configured to produce a flow of hot air, said flow of hot air being directed to the coffee beans contained in the chamber in order to heat them. Usually, the heating device comprises at least an air driver and a heater to heat the flow of air produced by the air driver.

The heating device can comprise a burner (meaning combustion) fed by natural gas, liquefied petroleum gas (LPG) or even wood. Alternatively the heating device can comprise an electrical resistor, a ceramic heater, a halogen source, a source of infrared and/or a source of microwaves.

Preferably the heating device is electrically powered so that the air contaminants produced during the roasting are contaminants generated from the heating of coffee beans themselves only and not from the burning of gases as it happens when the source of heating is a gas burner using natural gas, propane, liquefied petroleum gas (LPG) or even wood.

The apparatus comprises at least one first temperature probe to regulate the temperature supplied by the heating device. The temperature measured by this probe is used as an input data of the control system in feedback loop control. This first temperature probe is positioned outside the chamber meaning that it does not contact the coffee beans during the roasting operation. Preferably, this first probe is positioned in the apparatus in order to measure the temperature of hot air supplied to the chamber, that is between the heating device and the chamber. This position, that is upstream the chamber, prevents the probe from being dirtied by the beans and the smoke generated by the beans.

In order to improve the accuracy of the measure of hot air supplied to the chamber, the apparatus can comprise at least two first temperature probes. These first probes can be positioned in a conduit configured to drive the flow of hot air from the heating device to the chamber, preferably in a local transversal constriction of said conduit, each probe being positioned at different radial positions in said local transversal constriction.

Optionally, the apparatus can comprise another first probe downstream the chamber. Yet, this position of this probe downstream the chamber is less preferred due to the contact with smoke emitted roasting operation resulting in dirtiness and impact on the accurate measure of temperature.

The control system of the apparatus is operable to control the heating device in order to reproduce roasting curves, said roasting curves providing at least a set of points ($T_{@ti}$ ; ti) representing the temperature to be applied at discrete successive times ti, respectively. This control of the heating device is based on the temperature Treg regulated by the at least one first temperature probe in feedback loop control.

If the apparatus comprises more than one first probe, the average value of the measures of all said probes can be used by the control system as the temperature Treg in feedback loop control.

Secondly the system comprises at least one second temperature probe configured to be introduced temporary only inside the roasting apparatus to measure the temperature inside the roasting chamber. The temporary presence of the at least one secondary probe enables the measure of the temperature inside the chamber or inside the temporary chamber during a process of calibration of the roasting apparatus.

One or several secondary probes can be introduced inside the roasting apparatus. When more than one secondary probe are used, these probes can be positioned at different zones of the chamber. Preferably, these probes are positioned in the same transversal cross section of the chamber.

Thirdly, the system comprises at least one means configured to create temporary a pressure loss of the flow of hot air inside the chamber while the chamber is void of coffee beans in order to simulate the presence of coffee beans inside the chamber during a roasting operation.

This means simulates the behaviour of the flow of hot air when it is introduced in a bed of coffee beans inside the roasting chamber. During a normal roasting operation, the flow of air introduced at the inlet of the roasting chamber is affected by the presence of coffee beans that it passes through and moves : there the air flow undergoes a loss of pressure.

The simulation means aims to reproduce this loss of pressure of the hot air flow though the chamber is void of beans.

As a result, the temperature measured at the at least one temporary probe reflects the temperature provided in the chamber as if the coffee beans were present in the chamber.

The temporary introduction of the second temperature probe and the temporary simulation of the presence of beans enable the measure of the temperature inside the chamber of the roasting apparatus independently of the use of coffee beans and accordingly the calibration of the heating device of the roasting apparatus can be implemented independently from the presence of beans.

In one embodiment of the system :

- the heating device of the roasting apparatus comprises an air flow driver and a heater and the control system of the roasting apparatus is configured to operate said air flow driver to adjust the flow of air, and
- the means configured to create temporary a pressure loss of the flow of hot air inside the chamber while the chamber is void of coffee beans is the air flow driver.

With this type of heating device of the roasting apparatus, the air flow is operable to generate a flow of air in direction of the inlet of the chamber. During a roasting operation, the generated flow is configured to heat the beans and to agitate and lift the beans. Specifically, the air flow driver can be a fan powered by a motor. The heater is operable to heat the flow of air generated by the air flow driver with the result that the flow of air is heated before it enters the chamber to heat and to lift the beans. In the present embodiment, the control system of the roasting apparatus is configured to enable the control of the flow of air generated by the air flow driver.

When the chamber is void of beans, the simulation of the presence of beans can be obtained by controlling the air driver.

In another embodiment, the means configured to create a pressure loss of the flow of hot air while the chamber is void of coffee beans comprises at least one removable device designed to restrict the flow of hot air inside and/or downstream the chamber.

Such a device restricting the flow of air creates a counter pressure or a pressure loss like the coffee beans when they are present inside the roasting chamber.

By removable, it is meant that this device can be easily temporary positioned inside the roasting apparatus and then removed.

This device restricting the flow of air can comprise a grid, a mesh, a plate with at least one hole and/or a pipe with a venturi design.

This device can be introduced and removed either manually or automatically.

In one mode of this last embodiment, the at least one removable device designed to restrict the flow of hot air inside and/or downstream the chamber is an integrated and movable part of the coffee beans roasting apparatus, and the roasting apparatus comprises means configured to move the at least one device and to position said device temporary and removably inside or at the outlet of the chamber of the roasting apparatus.

In another mode of the last embodiment:

- the dedicated roasting chamber of the coffee beans roasting apparatus is removable from the roasting apparatus, and
- the coffee beans roasting apparatus comprises an area designed to receive and hold said removable dedicated roasting chamber, and
- the at least one removable device designed to restrict the flow of hot air inside and/or downstream the chamber is part of a calibration chamber, said calibration chamber being configured to be introduced removably inside the holding and receiving area in place of the dedicated roasting chamber.

Preferably, this system comprises a roasting apparatus wherein the chamber is hot air fluid bed chamber. This chamber can be removed from the apparatus to introduce the beans to be roasted or to remove the roasted beans. Typically this kind chamber does not comprise any temperature probe positioned inside the chamber due to this necessity to remove the chamber from the apparatus frequently.

In this mode, the system comprises a calibration chamber similar to the chamber dedicated to the roasting operation except that this calibration chamber the at least one removable device designed to restrict the flow of hot air inside and/or downstream the chamber.

Accordingly, when it is required to simulate the presence of beans inside the roasting chamber, the chamber dedicated of roasting is removed from the apparatus and replaced by the calibration chamber.

In another mode of the last embodiment, the means configured to create a pressure loss of the flow of hot air while the chamber is void of coffee beans comprises granular inert objects, said granular inert objects being designed to simulate coffee beans.

By inert, it is meant that these objects are of a nature that does not react chemically while applying heat to them. In a preferred embodiment these granular inert objects are glass beads.

These granular inert objects present the advantage of not creating dirtiness inside the roasting chamber of the apparatus of the system.

Preferably, the roasting apparatus comprises means configured to position the at least one secondary probe temporary and removably inside or at the outlet of the chamber of the roasting apparatus.

In one mode, the at least one second temperature probe can be an integrated part of the coffee beans roasting apparatus and the roasting apparatus can comprise means to move said at least one second probe in the conduit connected to the outlet of the chamber. In that mode, the roasting apparatus comprises permanently the at least one second temperature probe but said probe is operable only temporary when it is moved to be positioned in the conduit connected to the outlet of the roasting chamber.

Although this second temperature probe is not positioned inside the roasting chamber, it provides measures close to the temperature inside the chamber Teal. Due to the fact that this probe can be moved to be positioned inside the conduit connected to the outlet of the roasting chamber and then moved away from this conduit, this probe can be protected from the smoke emitted during roasting operation and only used during a calibration operation in proper conditions.

In another mode, the at least one second temperature probe is a device external to the coffee beans roasting apparatus and the coffee beans apparatus comprises an opening designed to introduce the at least one second temperature probe in an airtight manner inside the chamber or in the conduit connected to the outlet of the chamber.

In that mode, the at least one second temperature probe is not part of the roasting apparatus. It is a separate device.

The roasting apparatus comprise an opening to slide the at least one second temperature probe inside the chamber. Once introduced in the opening, the connection between the probe and the opening is airtight, for example by means of a tight elastic seal.

Preferably, once this at least one secondary probe has been introduced inside the chamber, it is positioned in the upper half part of the chamber. At this position, the flow of hot air introduced through the bottom of the chamber is more homogenous than at the inlet of the chamber and reflects more precisely the temperature inside the chamber.

In another mode :

- the dedicated roasting chamber of the coffee beans roasting apparatus is removable from the roasting apparatus, and

- the coffee beans roasting apparatus comprises an area designed to receive and hold the removable dedicated chamber, and
- the at least one second temperature probe is part of a calibration chamber, said calibration chamber being configured to be introduced temporary inside the holding and receiving area in place of the dedicated roasting chamber.

Accordingly, when it is required to position at least one second temperature probe inside the roasting chamber, the chamber dedicated to roasting is removed from the apparatus and replaced by the calibration chamber that holds the at least one second temperature probe.

In one embodiment, the coffee beans roasting apparatus comprises :

- a chamber dedicated to calibration, said calibration chamber comprising :

    . the at least one second temperature probe,
    . and optionally at least one device designed to restrict the flow of air in order to simulate the presence of coffee beans inside the chamber during a roasting operation,
    and

- means to guide the flow of hot air supplied by the heating device either to the chamber dedicated to roasting of coffee beans or to the chamber dedicated to calibration.

In this embodiment, the system is embodied in one single coffee beans roasting apparatus that comprises one chamber dedicated to the roasting of coffee beans during usual roasting operation and one chamber dedicated to the calibration of the heating device only during a specific calibration mode. The air heating dive supplies hot air either to the roasting chamber or to the calibration chamber depending on the mode. The apparatus comprise means to provide hot air to one or the other chamber alternatively.

The calibration chamber comprises the second temperature probe and eventually at least one mechanical device to simulate the presence of coffee beans as described above. Alternatively, if the control system of the roasting apparatus is configured to operate the air flow driver to adjust /modify/adapt/change the flow of air, the simulation of the presence of the coffee beans can be produced without such mechanical device.

In all modes and embodiments, several secondary probes can be introduced. When more than one secondary probe are used, these probes can be positioned at different zones of the chamber and the outlet conduit.

Whatever the mode, the control system of the roasting apparatus can be configured :

- to receive input of measured temperature by said at least one second temperature probe, and
- to implement a calibration process of the heating device of the roasting apparatus based on said input.

In this system, the at least one second temperature probe is present and operable inside the roasting chamber during the calibration mode of the apparatus only. During the normal roasting operation, this second probe is not positioned in the chamber or downstream the roasting chamber

The dedicated roasting chamber is devoid of any temperature probe positioned inside the chamber or downstream the roasting chamber and configured to provide temperature as an input in a regulation feedback loop of the heating device during roasting.

Preferably, the apparatus comprises a user interface and the control system can be configured to make the calibration mode implementing the calibration process accessible via the user interface.

In the calibration mode, the control system can configured to ask the operator to introduce the at least one second temperature probe inside the chamber or to replace the chamber by a calibration chamber, said calibration chamber comprising at least one second temperature probe. The user interface can display schemas to illustrate the operation of introducing the temporary second temperature probe or the temporary calibration chamber

In a second aspect, there is provided a calibration chamber configured to be introduced in place of the roasting chamber of a coffee beans roasting apparatus, said coffee beans roasting apparatus comprising :

- a roasting chamber to contain coffee beans, said chamber being removable,
- a heating device to supply a flow of hot air to the chamber,
- at least one first temperature probe to regulate the temperature of air supplied by the heating device, said first temperature probe being positioned outside the chamber,
- a control system configured to control the heating device and configured to reproduce roasting curves each of said roasting curves providing a set of points $(T_{@ti} ; t_i)$ representing the temperature to be applied at discrete successive times $t_i$, respectively, said control of the heating device being based on the temperature Treg regulated by the at least one first temperature probe,

said calibration chamber comprising :

- at least one second temperature probe.

This calibration chamber is configured to replace the roasting chamber of the roasting apparatus during an operation of calibration of the heating device of said apparatus. It is designed to fit tightly inside the roasting apparatus in the same manner as the dedicate roasting apparatus.

The same calibration chamber can be used for a series of similar roasting apparatuses.

Preferably, the internal design of the calibration chamber is symmetrical around a longitudinal vertical axis. Preferably, the at least one second temperature probe is positioned along/on said axis.

This symmetrical design enables the introduction of the calibration chamber in whatever position inside the roasting apparatus without any impact on the introduction of the flow of hot air inside the chamber though the bottom inlet of the chamber and no impact on the temperature measured by the second temperature probe.

In one mode, the calibration chamber comprises at least one device designed to restrict the flow of hot air inside said calibration chamber. This device is configured to create an obstacle to the flow of air.

In one preferred calibration chamber, the at least one device designed to restrict the flow of hot air inside the calibration chamber can comprise :

- a first plate pierced by holes and positioned at the bottom of the calibration chamber,
- a second plate pierced by holes and positioned downstream the at least one second temperature probe, the holes being designed to lead the flow of air to converge to the at least one second temperature probe,
- a third plate pierced by holes and positioned between the first plate and the at least one second temperature probe.

In another mode, the calibration chamber is a tube, said tube presenting a transversal section inferior to the transversal section of the roasting chamber of the roasting apparatus, optionally said tube comprises :

- a first plate pierced by at least one hole and positioned at the bottom of the calibration chamber, and/or
- a second plate pierced by at least one hole and positioned downstream the at least one second temperature probe (3).

In one particular implementation of that mode, the fist and/or the second plate can comprise means to adjust the free section of the hole, like a diaphragm.

In a **third aspect,** there is provided a process for calibrating the roasting apparatus of a system such as described above and comprising the steps of :

a - introducing temporary the at least one second temperature probe inside the roasting apparatus,

b - while the chamber is void of beans, controlling the heating device to reproduce a preset curve Rset, said preset curve providing a series of points ($T_{set@ti \; ; \; ti}$) representing the temperature $T_{set@t1}$, $T_{set@t2}$, ... $T_{set@tfinal}$ to be applied at preset corresponding successive times t1, t2, ..., tfinai respectively, said control being based on the temperature Treg measured by the at least one first temperature probe (5),
and creating a pressure loss of the flow of hot air in order to simulate the presence of coffee beans inside the chamber during said reproduction of the preset curve $R_{set}$,

c - during the reproduction of the preset curve $R_{set}$, measuring the temperature $T_{cal}$ in function of time inside the chamber at the at least one second temperature probe enabling the determination of at least a set of points ($T_{cal@ti \; ; \; ti}$),

d - comparing the temperature $T_{cal@ti}$ measured at at least one time ti with the temperature $T_{ref@ti}$ at said same time ti of a pre-determined reference curve $R_{ref}$ obtained with the master roasting apparatus (M), said reference curve $R_{ref}$ representing the temperature $T_{ref}$ measured in the chamber of the specific master apparatus (M) while controlling the heating device of the master apparatus to reproduce said preset curve $R_{set}$,

e - based on this comparison, calibrating the roasting apparatus (X) by applying a correction to the feedback loop regulation, preferably by applying a correction to the temperature Treg measured by the first temperature probe (5) or by applying a correction to the temperatures $T_{@ti}$ provided by the roasting curves to be reproduced by the roasting apparatus (X).

The process relates to the calibration of a coffee beans roasting apparatus (X) in order to make it consistent in the reproduction of coffee beans roasting recipes that were defined with one specific master roasting apparatus (M). Usually, a roasting recipe is defined for a specific type of coffee beans or a specific blend of different beans by a coffee expert operating one particular roasting apparatus. This roasting apparatus with which the expert has defined the roasting recipes is defined as the master roasting apparatus.

The calibration process aims to enable the consistent reproduction of the coffee beans roasting recipes defined with the specific master roasting apparatus (M) with other apparatuses (X) that are usually manufacturing copies of the specific master roasting apparatus (M).

Depending on the system, in first step a), the calibration process can comprise :

- introducing at least one second temporary temperature probe inside or at the outlet o the chamber of the roasting apparatus to be calibrated, or
- replacing said chamber by a temporary calibration chamber, said temporary calibration chamber comprising at least one second temperature probe.

In both modes, the presence of the at least one secondary probe enables the measure Teal of temperature inside the chamber or the temporary chamber during the calibration process.

In addition, in order to create a pressure loss of the flow of hot air in order to simulate the presence of coffee beans inside the chamber during the reproduction of the preset curve $R_{set}$ and depending on the system, in first step a), the calibration process can comprise :

- introducing at least one removable device designed to restrict the flow of hot air inside and/or downstream the chamber, or
- replacing the chamber by a temporary calibration chamber, said temporary calibration chamber comprising at least one means configured to create a pressure loss of the flow of hot air,
- introducing granular inert objects inside the chamber of the roasting apparatus to be calibrated, said granular inert objects being designed to simulate coffee beans.

In the further step b), the calibration process comprises controlling the heating device of the apparatus (X) to reproduce a preset curve Rset, said preset curve providing a set of points ($T_{set@ti}$ ; ti) representing the temperature $T_{set@t1}$, $T_{set@t2}$, ... $T_{set@tfinal}$ to be applied at predefined corresponding successive times t1, t2, ..., $t_{inal}$ respectively, said control being based on the temperature Treg regulated by the at least one first temperature probe.

If in the system the heating device of the roasting apparatus comprises an air flow driver and a heater and the control system of the roasting apparatus is configured to operate said air flow driver to adjust the flow of air, then during step b) the air flow driver can adjusted to create a pressure loss of the flow of hot air to simulate the presence of coffee beans inside the chamber during a roasting operation.

During the reproduction of the preset curve Rset, in a simultaneous step c), the calibration process comprises measuring the temperature Teal inside the chamber at the at least one second temperature probe in function of time. Accordingly, this step c) enables the determination of at least a set of points ($T_{cal@ti}$ ; ti).

In a step d), the calibration process comprises comparing the temperature $T_{cal@ti}$ measured at at least one time ti with the temperature $T_{ref@ti}$ at said same time ti of a pre-determined reference curve $R_{ref}$ obtained with the master roasting apparatus (M). This calibration curve $R_{ref}$ represents the temperature Tref measured in the chamber of the master apparatus (M) while controlling the heating device of the master apparatus to reproduce the same preset curve $R_{set}$.

As further described below, this step d) can be implemented after or simultaneously to steps b) and c).

Then, in a step e), based on the comparison resulting from step d), the calibration process comprises calibrating the roasting apparatus (X) by applying a correction to the feedback loop regulation. Preferably, this correction is applied :

- to the measured temperature Treg in the control system of the apparatus (X). Here, it is meant that, in the control system, the value of the temperature measured by the at least one first probe is corrected, based on the comparison established in step d), in the feedback loop regulation of the heating device.
  or
- to the temperatures $T_{@ti}$ provided by the roasting curves to be reproduced inside the control system of the roasting apparatus. Here, it is meant that, in the control system, the value of the temperature to be reproduced by the heating device is corrected, based on the comparison established in step d), in the feedback loop regulation of the heating device.

Depending on the type of apparatus, the type of heating (such as variation of heater only or fan only or both fan and heater), the correction can be a multiplication factor, the combination of a multiplication factor and an offset, a correction based on a polynomial formula, a correction based on a log type formula or an offset only. Usually, the correction can be determined via well-known mathematical regression methods establishing relationship between $T_{cal@ti}$ and $T_{ref@ti}$.

In one embodiment of the calibration process :

- step d) happens simultaneously to step c), and

- in step c), during the reproduction of the preset curve Rset, at predefined times tref i, corresponding temperatures $T_{ref@tref\,i}$ sand $T_{cal@tref\,i}$ are compared and a correction is immediately applied to the feedback loop regulation, preferably a correction is applied to the temperature Treg regulated by the first temperate probe or a correction is applied to the temperatures $T_{set@ti}$ provided by the preset curve Rset,

- in step e), based on the last correction in step c), the roasting apparatus (X) is calibrated by applying said last correction to the feedback loop regulation, preferably by applying said last correction to the temperature Treg measured by the first temperature probe or by applying said last correction to the temperatures $T_{@ti}$ provided by the roasting curves to be reproduced by the roasting apparatus (X).

Preferably, in the calibration process, between step c) and step d) :

- the value of the temperature $T_{cal@ti}$ measured at the at least one second temperature probe at step c) can be adjusted to an adjusted value $T_{cal@ti-adjusted}$, said adjusted value depending on the second temperature probe introduced inside the chamber of the roasting apparatus to be calibrated or on the temporary calibration chamber replacing the chamber of the roasting apparatus to be calibrated, and

- in step d) this adjusted value $T_{cal@ti-adjusted}$ can be compared with the temperature $T_{ref@ti}$. It has been observed that by introducing different second temperature probes inside the roasting chamber and operating the calibration process with each of said different second temperature probes, different corrections of the feedback loop of the roasting apparatus were obtained. Indeed although the differences in the measures of the different probes were very small, a difference few degrees, these differences directly impacted the calibration process. Actually, it is known that a difference of few Celsius degrees directly impacts the final colour of the roasted beans by several CTN values (color test Neuhaus) and obviously the taste of the final roasted coffee beans. In an objective to reproduce as close as possible the roasting profile applied in the master apparatus, these differences of measures are preferably taken into account during the calibration process.

These differences can be related to the position of the second temperature probe inside the temporary calibration chamber, to small differences of mechanical construction of the temporary calibration chambers due to lack of assembly accuracy, production line variance, component variance, component ageing.

Usually, this adjustment is pre-determined in a previous operation of calibration of the second temporary temperature probe itself. This calibration of the second temporary temperature probe is realised by comparison with an already adjusted probe.

Different types of adjustment can be applied depending on the relationship between the temperatures of the two probes.

In one preferred process :

$$T_{cal@ti-adjusted} = K_{2probe}.(T_{cal@ti})^2 + K_{1probe}.T_{cal@ti} + T_{probe}$$

wherein :

$T_{probe}$ corresponds to a preset temperature offset, said preset temperature offset being specifically pre-determined for the at least one second temporary temperature probe introduced inside the chamber of the roasting apparatus to be calibrated or for the temporary calibration chamber replacing the chamber of the roasting apparatus to be calibrated, or is equal to 0 by default,

$K_{1probe}$ and corresponds to a preset temperature ratio, said preset temperature ratio being specifically pre-determined for the at least one second temporary temperature probe introduced inside the chamber of the roasting apparatus to be calibrated or for the temporary calibration chamber replacing the chamber of the roasting apparatus to be calibrated, or is equal to 1 by default,

K2probe and corresponds to a preset temperature ratio, said preset temperature ratio being specifically pre-determined for the at least one second temporary temperature probe introduced inside the chamber of the roasting apparatus to be calibrated or for the temporary calibration chamber replacing the chamber of the roasting apparatus to be calibrated, or is equal to 0 by default,

In the process of adjustment of the temperature, in step c), during the reproduction of the preset curve Rset, the value of $T_{probe}$ and/or the value of $K_{1probe}$ and/or the value of K2probe can vary with time and/or temperature.

It has been observed that the difference of measure between two temperature probes is amplified at higher temperatures. Accordingly, the value of the coefficients $T_{probe}$ , $K_{1probe}$ and K2probe can change during the reproduction of the preset curve $R_{set}$ of step c) as temperature changes.

The above preferred mode uses an adjustment of the temperature based on a polynomial , yet other types of adjustment can be applied.

In one particular mode of the above embodiment of the calibration process :

- step d) happens simultaneously to step c), and
- in step c), during the reproduction of the preset curve Rset, at predefined times tref i, the corresponding ratio $T_{ref@tref\ i}/T_{cal@tref}$ i is calculated and a correction is immediately applied : either to the temperatures $T_{set}$ provided by the roasting curves to be reproduced, said correction being a multiplication factor Ki defined as follows :

$$K_i = K_0 \prod_{n=1}^{i} \frac{T_{ref@trefn}}{T_{cal@trefn}}$$

wherein $K_0$ is preset, or is equal to 1 by default, _or_

. to the temperature Treg measured by the first temperature probe (5), said correction being a multiplication factor

$$\frac{1}{Ki}_,$$

- in step e), based on the last defined ratio Ki in step c), the roasting apparatus (X) is calibrated by applying :

. said factor Ki of correction to the temperatures $T_{@ti}$ provided by the roasting curves to be reproduced by the roasting apparatus (X) or

. said factor $\dfrac{1}{Ki}$ to the temperature Treg measured by the first temperature probe.

$K_0$ usually corresponds to a preset factor specifically pre-determined for a series of similar manufactured apparatuses.

Actually, the roasting apparatus to be calibrated is usually part of a series of similar manufactured apparatuses. This series of similar manufactured apparatuses can be apparatuses comprising the same elements assembled in the same way, corresponding for example to a particular model or design of apparatus or even to the same batch of production.

If a first apparatus of the series has already been calibrated and its multiplication factor correction Ki pre-determined, then said correction or a rounded off value of said correction can be immediately applied in the calibration process of the other apparatuses of the series as the preset factor $K_0$. The advantage is that the method of calibration becomes shorter.

If this preset factor $K_0$ is not known, for example further to the manufacturing of a new type of roasting apparatuses or due to the use of new devices in manufacturing (new air flow driver, new heater), then $K_0$ is set to 1.

Alternatively, $K_0$ can correspond to a preset factor defined in relation with ambient conditions such as temperature or humidity outside the roasting apparatus (X). If during the calibration process, ambient conditions correspond to usual ambient conditions such as a temperature comprised between 20 and 25 °C and humidity of about 60 %, then this factor can be set to 1. Based on preliminary calibration of the same apparatus in different ambient conditions, different values can be pre-determined for this factor in function of ambient conditions and stored in a look up table for further operations of calibration.

Lastly, $K_0$ can correspond to a combination, that is a multiplication, of the above preset factor specifically pre-determined for a series of apparatuses and the above preset factor defined in relation with ambient conditions.

As mentioned above, in the above particular mode, the value of the temperature $T_{cal@ti}$ measured at the at least one second temperature probe at step c) can be adjusted to an adjusted value $T_{cal@ti-adjusted}$ depending on the second temporary temperature probe or the temporary calibration chamber used during the process of calibration of the roasting apparatus.

In the above particular mode, in step c), if for successive tref i the corresponding calculated ratios $T_{ref@tref\,i}/T_{cal@tref}$ i converge to one fixed value - for example $T_{ref@tref\,i}/T_{cal@tref}$ i differs by less than 2 % from $T_{ref@tref\,i-1}/T_{cal@tref\,i-1}$ - then step c) can be stopped and the last calculated factor of correction Ki can be used as the last defined ratio in step d). Actually, it means that the correction of the temperature in the regulation loop has already been reached and that continuing the operation will not provide a better correction.

In this particular mode, in step c), if for successive tref i the corresponding calculated ratios $T_{ref@tref\,i}/T_{cal@tref\,i}$ do not converge to one fixed value - in particular differ strongly from the previous calculated ratio $T_{ref@tref\,i-1}/T_{cal@tref\,i-1}$ and the next calculated ratio $T_{ref@tref\,i+1}/T_{cal@trefi+1}$ - then the calibration process can be stopped.

When the corresponding calculated ratios $T_{ref@tref\,i}/T_{cal@tref}$ i do not converge with time, for example oscillates, it means that no correction of the temperature in the regulation loop can be determined. The calibration process cannot be implemented.

In that case, the calibration process can be re-started to verify if it has been a temporary problem and the calibration process can be implemented successfully. If not, the default of calibration may reflect the fact that the roasting apparatus presents a defect, especially in the control of the heating device.

Preferably, the preset curve $R_{set}$ provides a set of points ($T_{set@tset\,i}$ ; $t_{set\,i}$) and comprises successively :

- in a first phase : a plateau of the temperature $T_{set}$ at a fixed temperature Tset-stab, preferably of about 40°C, then

- in a second phase : an increase of temperature $T_{set}$ from Tset-stab to a higher temperature Tset-high, then

- in a third phase : a plateau of the temperature $T_{set}$ at said temperature Tset-high.

- optionally the reproduction of the second and third phases at a higher temperature than Tset-high.

In the first phase, the fixed temperature Tset-stab is preferably defined as a temperature that can be easily reached by the roasting apparatus whatever the ambient temperature of the room where it is used. According to the place in the world (hot or cold geographical zone) and the type of shop (opened to the outside or in a room with conditioning air), a temperature Tset-stab of about 40°C can be defined as easily reachable by cooling for ambient temperatures higher than 40 °C and easily reachable by heating for ambient temperatures lower than 40 °C.

In the second phase, the increase can depend on the type of heating device used in the roasting apparatus, and in particular on the type of regulation of the power provided to the heating device.

Preferably, the above preset curve comprises a final phase of cooling wherein heating is stopped until temperature decreases and reaches Tset-stab back.

When the above preset curve with at least three phases is used in the calibration process, where :

- step d) happens simultaneously to step c), and
- in step c), during the reproduction of the preset curve Rset, at predefined times tref i, corresponding temperatures $T_{ref@tref}$ i sand $T_{cal@tref}$ i are compared and immediately a correction is applied to the temperature Treg measured by the first temperate probe inside the control system of the roasting apparatus, or to the temperatures $T_{set@ti}$ provided by the preset curve $R_{set}$ to be reproduced inside the control system of the roasting apparatus, and
- in step e), based on the last correction in step c), the roasting apparatus is calibrated by applying said correction to the temperature Treg measured by the first temperate probe inside the control system of the roasting apparatus, or to the temperatures $T_{@ti}$ provided by the roasting curves to be reproduced inside the control system of the roasting apparatus, then :
the at least one predefined time tref i is defined in the parts of the curve $R_{set}$ comprising a plateau, preferably one predefined time tref i is defined in the first phase and at least two predefined time tref i are defined in the third phase and optionally at least two predefined time tref i are defined in the reproduction of the second and third phases at a higher temperature than Tset-high.

When the above preset curve with at least three phases is used in the calibration process, where :

- step d) happens simultaneously to step c), and
- in step c), during the reproduction of the preset curve Rset, at predefined times tref i, the corresponding ratio

$T_{ref@tref\,i}/T_{cal@tref}$ i is calculated and a correction is immediately applied :

. either to the temperatures $T_{set}$ provided by the roasting curves to be reproduced, said correction being a multiplication factor Ki defined as follows :

$$K_i = K_0 \prod_{n=1}^{i} \frac{T_{ref@trefn}}{T_{cal@trefn}}$$

wherein $K_0$ is preset, or is equal to 1 by default, or
. to the temperature Treg measured by the first temperature probe, said correction being a multiplication factor

$$\frac{1}{Ki},$$

- in step e), based on the last defined ratio Ki in step c), the roasting apparatus (X) is calibrated by applying :

. said factor Ki of correction to the temperatures $T_{@ti}$ provided by the roasting curves to be reproduced by the roasting apparatus (X) or

. said factor $\frac{1}{Ki}$ to the temperature Treg measured by the first temperature probe.

then preferably, during step c) :

if during the first phase, for successive tref i, the corresponding calculated ratios $T_{ref@tref\,i}/T_{cal@tref}$ i converge, for example $T_{ref@tref\,i}/T_{cal@tref}$ i differs by less than 2 % from the previous calculated ratio $T_{ref@tref\,i-1}/T_{cal@tref\,i-1}$, then the first phase is shortened.

In that case, the second phase of the preset curve is applied earlier.
Similarly, preferably, during step c), if during the third phase, for successive tref i, the corresponding calculated ratios $T_{ref@tref\,i}/T_{cal@tref\,i}$ converge, for example $T_{ref@tref\,i}/T_{cal@tref}$ i differs by less than 2 % from the previous calculated ratio $T_{ref@tref\,i-1}/T_{cal@tref\,i-1}$, then the third phase is shortened.
In that case and if the preset curve comprises at least one further phase, said further phases are applied earlier.
Similarly, preferably, during step c), if, in the third phase, for successive tref i, the corresponding calculated ratios $T_{ref@tref\,i}/T_{cal@tref}$ i do not converge to one fixed value, then the third phase is lengthened.
Whatever the implementation, the process of calibration can comprise a step of obtaining information relative to ambient conditions such as temperature and/or humidity outside the roasting apparatus and :

- in step e) the correction can be modified based on said information. For example the correction comprises an offset. or
- the preset curve is modified by applying an offset to the temperature. For example, if this preset curve presents a plateau in the first phase, this plateau is offset.

Whatever the implementation, preferably in the process of calibration, after step c) where the preset curve Rset, is reproduced, the roasting apparatus is cooled down to a temperature of about 40°C.
This cooling step guarantees that the roasting apparatus is put back in a state enabling either the subsequent roasting operation or another calibration operation. This cooling is usually obtained by stopping heating but maintaining air flow inside the chamber.
Whatever the implementation, the calibration method can be implemented on demand, in particular for the first time after the manufacture of the roasting apparatus or after an operation of repairing or maintenance of said apparatus since these last operations can have a direct impact on the heating device and its relation to the chamber inside the apparatus or after the move or transport of the apparatus during which the apparatus may have suffered a shock.
The calibration process can be implemented automatically, for example at fixed time intervals or after a certain time of use. Some parts of the roasting apparatus like gaskets or seals may be damaged after a certain time of operation, particularly in hot roasting environment, which will directly affect the calibration of the apparatus.

The control system of the apparatus can be configured to display an alert at that time to urge the operator to operate the calibration process.

At the end of the operation of calibration, if calibration fails because a correction cannot be determined, the control system of the apparatus can be configured to display an alert to urge the operator to re-start the calibration process and/or to control the apparatus and eventually repair it.

If the apparatus comprises a communication interface for communication with a remote resource, an operator can display an alert if required.

Preferably, the apparatus comprises a user interface and the control system can be configured to make the calibration mode implementing the calibration process accessible via the user interface.

In the calibration mode, the control system can be configured to ask the operator to introduce the at least one second temperature probe inside the chamber or to replace the chamber by a calibration chamber, said calibration chamber comprising at least one second temperature probe. The user interface can display schemas to illustrate the operation of introducing the temporary second temperature probe or the temporary calibration chamber

The method can be implemented directly in the control system of a roasting apparatus or on a computer or on a mobile device like a smartphone or a table app, these devices being connected to the roasting apparatus. Connection can be remote or wired.

Preferably, in the embodiment where the heating device of the roasting apparatus comprises an air flow driver and a heater, then, before implementing step a) of the calibration process, the air flow driver is calibrated.

The calibration comprises the step of adjusting the value of the air flow supplied in the roasting apparatus to the value of the air flow supplied in the master roasting apparatus.

## Brief description of the drawings

Specific embodiments of the invention are now described further, by way of example, with reference to the following drawings in which :

- Figure 1 is a schematic view of a roasting apparatus of a system according to the present invention,
- Figure 2A shows a block diagram of a control system of the apparatus according to Figure 1 for the roasting operation,
- Figure 2B illustrates the feedback loop of the temperature regulation,
- Figures 3A, 3B, 3C illustrate different embodiments of the system relative to the temporary introduction of at least one second temperature probe inside the roasting apparatus to measure the temperature inside the roasting chamber,
- Figures 4A, 4B, 4C, 4D illustrate different embodiments of the system relative to means configured to create temporary a pressure loss of the flow of hot air inside the chamber while the chamber is void of coffee beans in order to simulate the presence of beans,
- Figures 5A to 5D illustrate schematically different calibration chambers,
- Figures 6A and 6B illustrate a system according to the invention in roasting and in calibration operations respectively,
- Figures 7A and 7B illustrate a roasting apparatus with an integrated dedicated calibration chamber according to the invention in roasting and in calibration operations respectively,
- Figure 8 illustrates the implementation of the calibration method with the system comprising an apparatus according to Figure 1,
- Figure 9 shows the block diagram of the control system of the system of Figure 8 in order to enable the implementation of the method of calibration,
- Figures 10A to 10D illustrate the implementation of the calibration method with a system according to the invention,
- Figures 11A to 11D illustrate alternative curves that can be used and obtained in the embodiment illustrated in Figures 10A and 10B,
- Figure 12A illustrates the closed feedback loop of the temperature regulation during the process of calibration illustrated in Figure 10B and Figures 11A to 11D,
- Figure 12B illustrates an alternative method of calibration to the one implemented in Figure 12A,
- Figures 13A and 13B illustrate curves that are alternatives to the curve illustrated in Figure 11D.

## Detailed description of exemplary embodiments

Roasting Apparatus

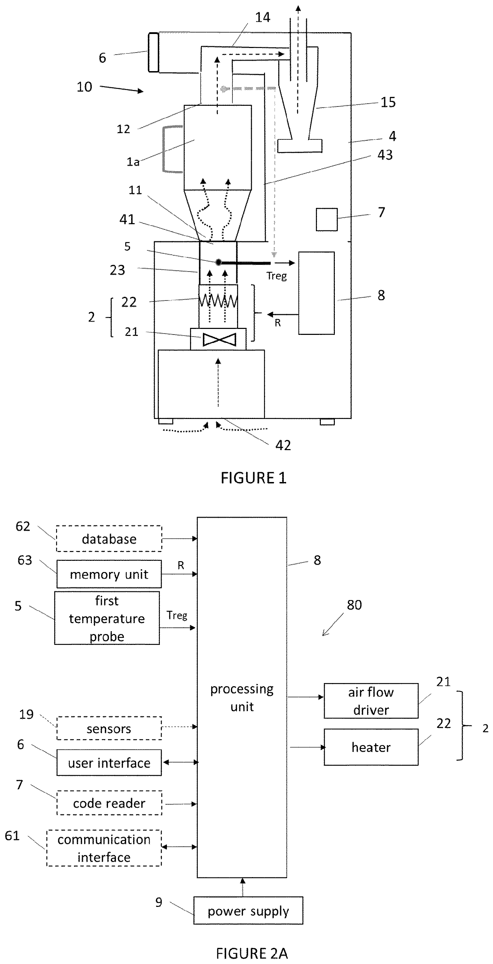

**Figure 1** shows an illustrative side view part of a roasting apparatus 10. Functionally, the roasting apparatus 10 is operable to roast coffee beans hold in a chamber 1 by means of a flow of hot air introduced inside this chamber. At a first level, the apparatus comprises : a housing 4, a roasting unit and a control system 80. These components will now be sequentially described.

Roasting Unit of Roasting Apparatus

The roasting unit is operable to receive and roast coffee beans.

The roasting unit typically comprises at a second level of the roasting apparatus 10 : a chamber 1 and a heating device 2, which are sequentially described.

The chamber 1 is configured to receive and hold the coffee beans introduced by the operator. In the preferred embodiment, the chamber 1 is removable from the housing 4. The chamber can be put aside the roasting apparatus :

- for the introduction or the removal of coffee beans, or
- for cleaning and maintenance of the chamber once it is removed, or
- for cleaning of the vertical housing part 43 behind the chamber.

The bottom opening 11 of the chamber is configured to enable air to pass through, specifically it can comprise a perforated plate on which the beans can lie and through which air can flow upwardly. The chamber 1 comprises a handle in order to enable the user to remove the chamber from the housing and hold it outside the housing.

A chaff collector 15 is in flow communication with the chamber outlet 12 through a smoke conduit 14 that receive chaffs that progressively separate from the beans and due to their light density are blown off to the chaff collector with smoke.

The heating device 2 comprises an air flow driver 21 and a heater 22.

The air flow driver 21 is operable to generate a flow of air (dotted lines arrows) in direction of the bottom 11 of the chamber. The generated flow is configured to heat the beans and to agitate and lift the beans. As a result the beans are homogenously heated. Specifically, the air flow driver can be a fan powered by a motor. Air inlets 42 can be provided inside the base of the housing in order to feed air inside the housing, the air flow driver blowing this air upwardly though a passage 23 to an air outlet hole 41 in direction of the chamber 1 as illustrated by dotted lines arrows.

The heater 22 is operable to heat the flow of air generated by the air flow driver 21. In the specific illustrated embodiment, the heater is an electrical resistance positioned between the fan 21 and the bottom opening 11 of the chamber with the result that the flow of air is heated before it enters the chamber 1 to heat and to lift the beans. Other types of heater can be used such as an electrical resistor, a ceramic heater, a halogen source, a source of infrared and/or a source of microwaves.

The heater 22 and/or the air flow driver 21 is/are operable to apply a roasting profile to the beans, this roasting profile being defined as a curve of temperature against time.

When the chamber is mounted to the housing, the bottom of the chamber is tightly connected to the air outlet hole 41 to avoid that the flow of hot air flow leaks at the connection.

The top opening 12 of the chamber is connected to a smoke and particulates evacuation device (not illustrated).

Although the invention is described with a roaster implementing a fluidized bed of hot air, the invention is not limited to this specific type of roasting apparatus. Drum roasters and other kinds of roasters can be used.

The roasting apparatus comprises at least one first temperature probe 5 to regulate the temperature of air supplied by the heating device 2. This first temperature probe is positioned outside the chamber 1 inside the conduit 23 guiding hot air supplied by the heating device 2 to the bottom of the chamber 11, that is upstream the chamber.

In an alternative less preferred mode, at least one first temperature probe 51 to regulate the temperature of air supplied by the heating device 2 can be positioned downstream the chamber. This probe can become dirtied by the smoke during roasting operation.

In another alternative less preferred mode, the apparatus can comprise both first temperature probe 5, 51 to regulate the temperature of air supplied by the heating device 2. The average of the measured temperatures is used to regulate the heating device 2.

The roasting apparatus 10 usually comprises a user interface 6 enabling the display and the input of information.

The roasting apparatus can comprise a code reader 7 to read a code associated to a type of coffee beans, for example present on the package of coffee beans. Preferably, this code reader is positioned in the apparatus so that the operator is able to easily position a code in front of it. It is preferably positioned at the front face of the apparatus, for example close to a user interface 6 of the apparatus. Accordingly, information provided by the code can be immediately displayed through the display of the user interface 6 positioned aside.

Control System of Roasting Apparatus

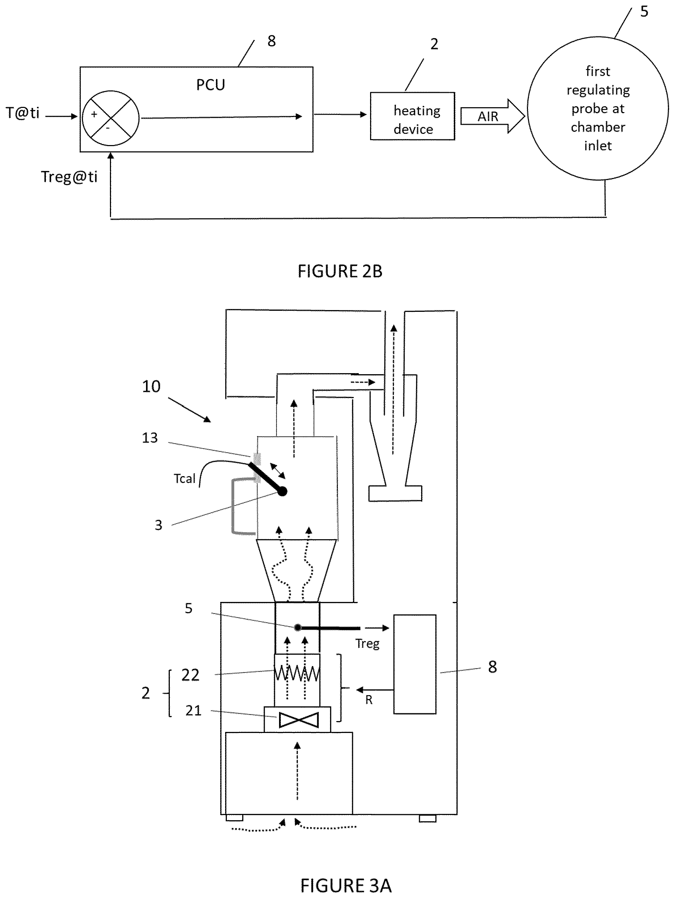

With reference to **Figures 1, 2A and 2B,** the control system 80 will now be considered : the control system 80 is operable to control the components of the apparatus to roast coffee beans. The control system 80 typically comprises at a second level of roasting apparatus : the user interface 6, the processing unit 8, an outside temperature probe 5, a power supply 9, a memory unit 63, optionally a database 62, sensors 19, a communication interface 61 for remote connection, a code reader 7 or any combination of these devices.

The user interface 6 comprises hardware to enable a user to interface with the processing unit 8, by means of user interface signal. More particularly, the user interface receives commands from a user, the user interface signal transfers the said commands to the processing unit 8 as an input. The commands may, for example, be an instruction to execute a roasting process and/or to adjust an operational parameter of the roasting apparatus 10 and/or to power on or off the roasting apparatus 10. The processing unit 8 may also output feedback to the user interface 6 as part of the roasting process, e.g. to indicate the roasting process has been initiated or that a parameter associated with the process has been selected or to indicate the evolution of a parameter during the process or to create an alarm. In addition, the user interface can be used to initiate a calibration mode of the roasting apparatus.

The hardware of the user interface may comprise any suitable device(s), for example, the hardware comprises one or more of the following : buttons, such as a joystick button, knob or press button, joystick, LEDs, graphic or character LDCs, graphical screen with touch sensing and/or screen edge buttons. The user interface 6 can be formed as one unit or a plurality of discrete units.

A part of the user interface can also be on a mobile app when the apparatus is provided with a communication interface 61 as described below. In that case at least a part of input and output can be transmitted to the mobile device through the communication interface 61.

The sensors 19 and the temperature probe 5 are operable to provide an input signal to the processing unit 8 for regulating of the roasting process and/or a status of the roasting apparatus. The input signal can be an analogue or digital signal. The sensors 19 typically comprise at least one temperature sensor 5 and optionally one or more of the following sensors : level sensor associated with the chamber 1, air flow rate sensor, position sensor associated with the chamber and/or the chaff collector.

A code reader 7 can be provided and operable to read a code, for example on coffee beans package, and automatically provide an input that is the identification of the type Cn coffee beans introduced in the chamber 1.

The processing unit 8 generally comprise memory, input and output system components arranged as an integrated circuit, typically as a microprocessor or a microcontroller. The processing unit 8 may comprise other suitable integrated circuits, such as : an ASIC, a programmable logic device such as a PAL, CPLD, FPGA, PSoC, a system on a chip (SoC), an analogue integrated circuit, such as a controller. For such devices, where appropriate, the aforementioned program code can be considered programmed logic or to additionally comprise programmed logic. The processing unit 8 may also comprise one or more of the aforementioned integrated circuits. An example of the later is several integrated circuits arranged in communication with each other in a modular fashion e.g. : a slave integrated circuit to control the user interface 6 in communication with a master integrated circuit to control the roasting apparatus 10.

The power supply 9 is operable to supply electrical energy to the said controlled components and the processing unit 8. The power supply 9 may comprise various means, such as a battery or a unit to receive and condition a main electrical supply. The power supply 9 may be operatively linked to part of the user interface 6 for powering on or off the roasting apparatus 10.

The processing unit 8 generally comprises a memory unit 63 for storage of instructions as program code and optionally data. To this end the memory unit typically comprises : a nonvolatile memory e.g. EPROM, EEPROM or Flash for the storage of program code and operating parameters as instructions, volatile memory (RAM) for temporary data storage. The memory unit may comprise separate and/or integrated (e.g. on a die of the semiconductor) memory. For programmable logic devices the instructions can be stored as programmed logic.

The instructions stored on the memory unit 63 can be idealised as comprising a coffee beans roasting program.

The control system 80 is operable to apply this coffee beans roasting program by controlling the heating device 2 - that is, in the particular illustrated embodiment of Figure 1, the air flow driver 21 and/or the heater 22 - using signal of the outside temperature probe 5.

The coffee beans roasting program can effect control of the said components using extraction information encoded on the code and/or other information that may be stored as data on the memory unit 63 or from a remote source through the communication interface 61 and/or input provided via the user interface 6 and/or signal of the sensors 19.

In particular, the control system 80 is configured to apply a roasting curve R providing the temperature $T_{@t1}$, $T_{@t2}$, ... $T_{@tfinal}$ to be applied at discrete successive times $t_1$, $t_2$, ..., $t_{final}$ respectively.

With that aim, the processing unit 8 is operable to :

- receive an input $T_{reg@ti}$ of the outside temperature probe 5,
- process the input according to roasting curve R,
- provide an output, which is the roasting curve R. More specifically the output comprises the operation of at least the heater 22 and the air flow driver 21.

The temperature measured by the temperature probe 5 is used to adapt the power of the heater 22 and/or the power of the air driver 21 in a feedback loop in order to apply the roasting curve to the beans for example as illustrated in Figure 2B.

In the illustrated closed feedback loop, the temperature $T_{reg@ti}$ measured at the outside temperature probe 5 is compared to the temperature $T_{@ti}$ of the roasting cure to be reproduced. Depending on the difference, the heating device 2 is operated to compensate the difference.

Depending on the type of control applied in the roaster, the heater 22 can be powered at one pre-determined power, meaning its temperature is constant, and in that case the power of the air driver 21 can be controlled based on the temperature regulated at the probe 5 in order to vary the time of contact of the flow air through the heater during its movement. Alternatively, the air driver 21 can be powered at one pre-determined power, meaning the flow rate of air is constant, and in that case the power of the heater 22 can be controlled based on the temperature regulated at the probe 5 in order to heat more or less air during its passage through the heater.

In a last alternative, both heater 22 and air driver 21 can be controlled based on the regulation of the temperature by probe 5.

The control system 80 can comprise a communication interface 61 for data communication of the roasting apparatus 10 with another device and/or system, such as a server system, a mobile device and/or a physically separated measuring apparatus 3. The communication interface 61 can be used to supply and/or receive information related to the coffee beans roasting process, such as roasting process information, type of the beans, quantity of beans. The communication interface 61 may comprise first and second communication interface for data communication with several devices at once or communication via different media.

The communication interface 61 can be configured for cabled media or wireless media or a combination thereof, e.g. : a wired connection, such as RS-232, USB, I2C, Ethernet define by IEEE 802.3, a wireless connection, such as wireless LAN (e.g. IEEE 802.11) or near field communication (NFC) or a cellular system such as GPRS or GSM. The communication interface 61 interfaces with the processing unit 8, by means of a communication interface signal. Generally the communication interface comprises a separate processing unit (examples of which are provided above) to control communication hardware (e.g. an antenna) to interface with the master processing unit 8. However, less complex configurations can be used e.g. a simple wired connection for serial communication directly with the processing unit 8.

The processing unit 8 enables access to different pre-defined roasting recipes ($RM_A$, $RM_B$,...), the recipes being adapted to the roasting of specific types of coffee beans or coffee blends ($C_A$, $C_B$, ...) and preferably specific quantities ($M_A$, $M_B$, ...) of said beans or blends.

These recipes can be stored in the memory 63 of the processing unit 8. Alternatively, these data can be stored in a remote server and the processing unit 8 can be supplied with access to this remote server through the communication interface 61, directly or indirectly through a mobile device establishing connection between the remote server and the processing unit. The control system 80 can comprise a database 62 storing information about coffee beans, in particular about the operation conditions for roasting specific coffee beans as described hereunder. The database 12 can be stored locally in the memory 63 of the control system of the roasting apparatus or remotely in a server accessible through the communication interface 63.

In one alternative embodiment, the control system can be provided with the roasting recipes $RM_n$ (and depending on the embodiment with their associated specific quantities $M_n$) during a code reading operation, these pieces of information being encoded inside the code and decoded by the control system.

The pre-defined roasting recipes ($RM_A$, $RM_B$,...) adapted to the roasting of specific types of coffee beans or coffee blends and specific weight of said beans are defined during an initial operation of roasting these specific beans inside a specific roasting apparatus defined as the master roasting apparatus (M). Usually, this operation is implemented by a coffee expert, who, based on his/her expertise in roasting, is able to define the parameters of temperature and time to optimally roast the specific beans and, as a result, to define the roasting recipe providing a set of points ($T_{@ti}$ ; ti) representing the temperature $T_{@t1}$, $T_{@t2}$, ... to be applied at predefined corresponding successive times t1, t2, ... respectively.

Once these roasting recipes are pre-defined with the master roasting apparatus, they can be reproduced automatically with roasting apparatus similar to the master roasting apparatus. Logically, starting from the same beans and applying the same roasting recipes in roasting apparatuses similar to the master roasting apparatus, the same roasted coffee beans should be obtained. Yet, it has been observed that the reproduction of the roasting was not systematically consistent. Although the temperature probe 5 was perfectly calibrated to measure the correct temperature, non-consistency in the roasting of the same beans was observed between similar roasting apparatuses.

In the course of the present invention, it was suspected that small differences had appeared between each apparatus during manufacturing. These differences can relate to the use of different key components of the apparatuses (fan, heater, temperature sensor) further to changes in supply sources or to small differences in the assembly of each apparatus, for example creating very small air leakages at various places, or due to the small differences in the relative positions of the key elements one to the other.

As a result, although the flow of air introduced inside the chamber presented the right temperature as measured by the temperature probe 5, this flow of hot air was received differently inside the chamber with a direct impact on the roasting of the beans.

In order to solve this problem, a system and method have been developed to enable the calibration of any new manufactured roasting apparatus so that said apparatus can reproduce consistently the roasting recipes defined with the specific master roasting apparatus.

This system comprises, in addition to the roasting apparatus to be calibrated :

- at least one second temperature probe configured to be introduced temporary inside the roasting apparatus to measure the temperature inside the roasting chamber or at the outlet of the roasting chamber, and
- means configured to create temporary a pressure loss of the flow of hot air inside the chamber while the chamber is void of coffee beans in order to simulate the presence of coffee beans inside the chamber during a roasting operation.

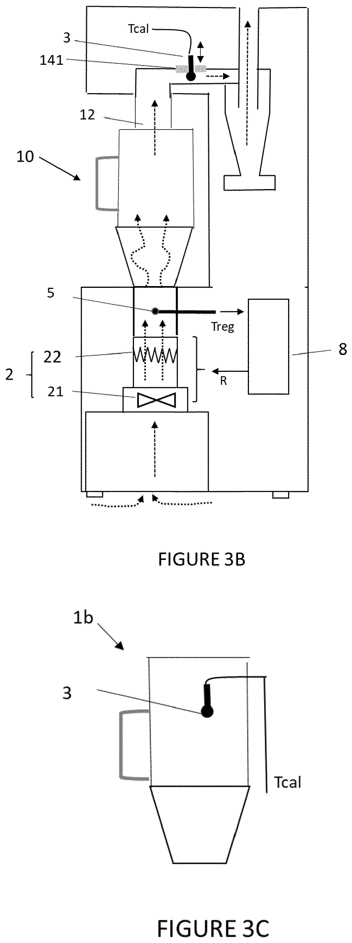

**Figures 3A, 3B, 3C** illustrate different embodiments of the system relative to the temporary introduction of at least one second temperature probe 3 inside the roasting apparatus to measure the temperature inside the roasting apparatus during the calibration operation of the apparatus.

In **Figure 3A,** an opening 13 is provided inside a wall of the roasting chamber 1 and a temperature probe 3 can be introduced temporary through this opening to measure temperature Tcal inside the chamber itself. Preferably the opening 13 provides airtight connection with the probe once it is introduced inside the chamber and after it has been removed from the chamber in order to not affect the flow of hot air inside the chamber. Tightness can be provided by an elastic seal during introduction and/or a cover after removal.

In **Figure 3B,** an opening 141 is provided inside a wall of the smoke conduit 14 downstream the outlet 12 of the chamber in order to introduce temporary and then remove a temperature probe 3. In the same manner as in Figure 3A, the opening 141 provides airtight connection with the probe once it is introduced inside the conduit 14 and after it has been removed from the conduit in order to not affect the flow of hot air inside the chamber 1. Tightness can be provided by an elastic seal during introduction and/or a cover after removal. In this mode, although the temperature is not measured directly inside the chamber, the measure is close to said temperature. Since this probe 3 being introduced inside the smoke conduit 14 during calibration operation only, which happens when the chamber is void of beans and accordingly without generation of smoke, this probe remains proper and provides accurate measure of temperature Tcal of flow of hot air emerging at the outlet of the chamber.

In this embodiment, the second probe 3 can be an integrated part of the coffee beans roasting apparatus 10 and the apparatus can comprise a means to move said second probe 3 in the smoke conduit 14 when a calibration operation is implemented. This means can be actuated manually (lever, push button) or automatically (through a motor). A sensor can be provided to check the position of this second probe depending of the operation mode : roasting or calibration. This probe shall not be present inside the smoke conduit during the roasting operation.

**Figure 3C** illustrates a calibration chamber 1b comprising a temperature probe 3 fixedly connected therein, e.g. crimped through the chamber wall) so that temperature Tcal inside the chamber can be measured. Such a calibration chamber can be introduced in place of the roasting chamber 1a of the roasting apparatus if this latter chamber is removable therefrom. Usually, this type of roasting apparatus comprises an area designed to receive and hold the removable chamber 1a dedicated to roasting or alternatively removable chamber 1b dedicated to calibration.

In an alternative to the embodiments illustrated in Figures 3A and 3C, an IR probe measuring temperature by detecting infrared emissions from the beans can be used without introducing the probe inside the chamber if the walls of the chamber present at least one transparent part. Preferably the IR probe can be surrounded by a cavity in order to focalize measure on the beans inside the chamber.

Whatever the mode, the value of the temperature measured inside the chamber by the second probe 3 is supplied to the control system of the system, generally to the control unit 8 of the roasting apparatus, in order to calibrate the apparatus.

When the second probe 3 is a device external to the roasting apparatus (like in Figures 3A and 3C), the probe can be connected through a USB port to the roasting apparatus or even can be connected remotely by Bluetooth or WiFi.

Optionally, several temporary probes positioned at different places can be used to increase accuracy of the measure, for example inside the chamber and downstream the chamber.

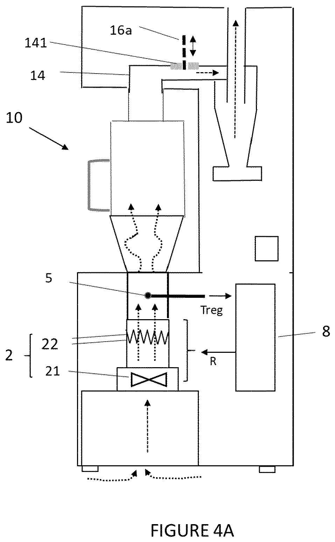

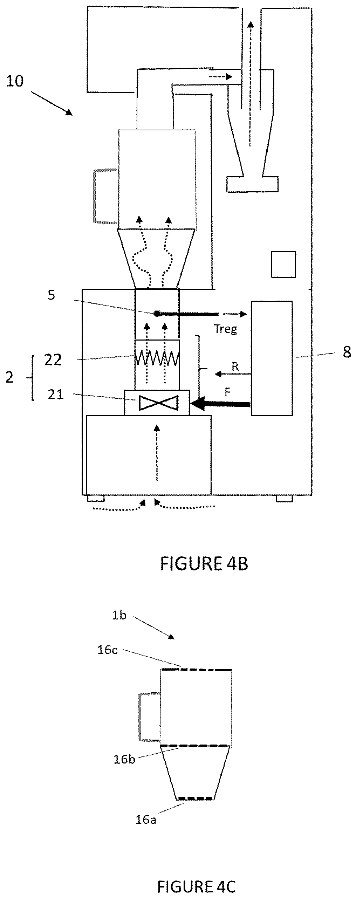

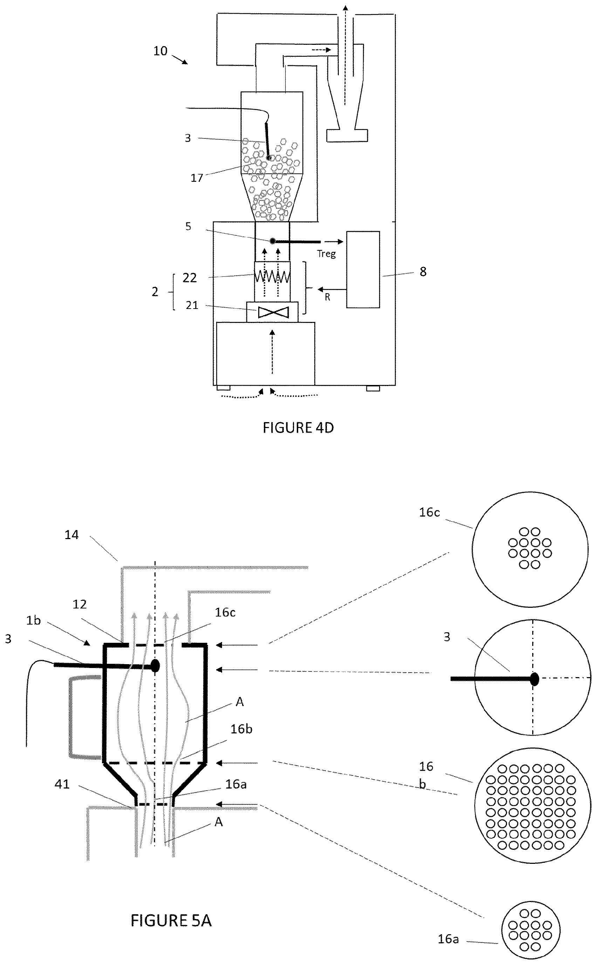

**Figures 4A, 4B, 4C, 4D** illustrate different embodiments of the system relative to the different means configured to create temporary a pressure loss of the flow of hot air inside the chamber while the chamber is void of coffee beans in order to simulate the presence of beans.

In **Figure 4A,** a device 16a designed to restrict the flow of air can be introduced and then removed inside the smoke conduit 14. This device, such as a plate pierced by holes, can be removably slid through an opening 141 inside this conduit during the calibration operation. The design is configured to simulate the pressure loss of air inside the chamber when beans are present in the chamber. In this embodiment, this device 16a can be an integrated part of the coffee beans roasting apparatus 10 and the apparatus can comprise a means to move said device 16a in the smoke conduit 14 when a calibration operation is implemented. This means can be actuated manually (lever, push button) or automatically (through a motor). A sensor can be provided to check the position of this device depending of the operation mode: roasting or calibration. This probe shall not be present inside the smoke conduit during the roasting operation.

Preferably the opening 141 provides airtight connection with the device 16a once it is introduced inside the conduit 14 and after it has been removed from the conduit in order to not affect the flow of hot air inside the chamber 1. Tightness can be provided by an elastic seal during introduction and/or a cover after removal.

In **Figure 4B,** the means configured to create a pressure loss of the flow of hot air while the chamber is void of coffee beans is the air flow driver 21 of the heating device. In order to simulate the presence of coffee bans inside the chamber, the control system sets the air flow driver, e.g. the speed of rotation if this driver is a fan or the power of voltage of this fan, in order to obtain in the chamber a flow similar to the one obtained in presence of beans (as represented by arrow F).

**Figure 4C** illustrates a calibration chamber 1b comprising air flow restricting means to simulate the presence of air beans. In the specific illustrated embodiment, the restricting means are three plates pierced with holes.

Such a calibration chamber can be introduced in place of the roasting chamber 1a of the roasting apparatus if this latter chamber is removable therefrom. Usually, this type of roasting apparatus comprises an area designed to receive and hold the removable chamber 1a dedicated to roasting or alternatively removable chamber 1b dedicated to calibration.

In **Figure 4B,** the means configured to create a pressure loss of the flow of hot air while the chamber is void of coffee beans comprises multiple granular inert objects 17 introduced inside the chamber 1 in place of the beans, for example glass beads.

Optionally the above different air flow restricting means can be combined in order to improve the simulation of the presence of coffee beans inside the chamber during a roasting operation. For example, the granular inert objects can be used with a modulation of the air flow driver or a removable device designed to restrict the flow of air can be with a modulation of the air flow driver.

Each of the different embodiments for introducing temporary a second temperature probe inside the roasting apparatus can be combined with each of the different embodiments comprising means configured to create temporary a pressure loss of the flow of hot air inside the chamber. For example the embodiment of Figure 3A can be implemented with the embodiment of Figures 4A, 4B or 4D.

In one preferred implementation, the system comprises a calibration chamber 1b that comprises simultaneously a second temperature probe and the means configured to create temporary a pressure loss of the flow of hot air inside the chamber that is combining the features of the embodiments illustrated in Figures 3C and 4C.

**Figure 5A** illustrates schematically a first embodiment of such a calibration chamber 1b.

The chamber 1b dedicated to calibration is configured to replace the usual chamber dedicated to roasting inside the apparatus for roasting. It comprises connection means configured to fit with corresponding connection means of the roasting apparatus and providing connection at the bottom opening with the air outlet hole 41 dispensing air upwardly and at the top opening with the smoke conduit 14.

The chamber 1b comprises a second temperature probe 3 fixedly positioned inside the chamber. Preferably, the internal design of the chamber is symmetrical around a longitudinal vertical axis and the second temperature probe 3 is positioned on said axis. Consequently, for each calibration operation, the chamber can be positioned in whatever angular position without modifying the position of the probe relatively to the air outlet hole 41 of the roasting apparatus.

Preferably, the temperature probe 3 is positioned in upper half part of the chamber. As a result, the air flow introduced at the bottom of the chamber can be homogenised before being measured by the probe and the measure reflects a more accurate value.

The chamber comprises a first plate 16a pierced by holes and positioned at the bottom of the calibration chamber. This first plate creates a first pressure loss of the air flow inside the chamber to simulate the presence of beans. In addition, this plate is configured to improve the homogenisation of the sub-air flows A through the transversal horizontal section of the chamber downwards this first plate 16a : it means the flows that presented various direction upstream become more vertically aligned and parallel downstream this plate. As the air flow supplied at the air outlet hole 41 of the housing is often asymmetric, this first plate 16a break this air flow and starts homogenising this air flow by creating multiple parallel smaller flows. The holes are sized, designed and distributed to obtain these effects. For example, circular holes with 2 mm diameter and distributed along the whole surface of the plate 16a provide these effects.

The chamber comprises a second plate 16b pierced by holes and positioned at the bottom of the calibration chamber. This second plate creates a second pressure loss of the air flow inside the chamber to simulate the presence of beans. This plate is configured to improve the production of homogenised flows of air inside the chamber (because the aim is to read at the temperature probe a temperature that is not particular at one point of the chamber but that really provides the average temperature inside the chamber by dividing again the flows of air generated at the first plate in additional sub-flows. The holes are sized, designed and distributed to obtain these effects. For example, circular holes with 4 mm diameter and distributed along the whole surface of the plate 16b provide these effects. The chamber comprises a third plate 16c pierced by holes and positioned just upstream the probe 3. This plate creates a third pressure loss of the air flow. It is preferably designed to lead the different flows of air created at the second plate 16b to converge to the second temperature probe 3. For example, this third plate comprises circular holes with 3 mm diameter and distributed along the centre of the plate 16c only. The external ring of the third plate does not comprise hole in order to force flows of air to converge to the probe.

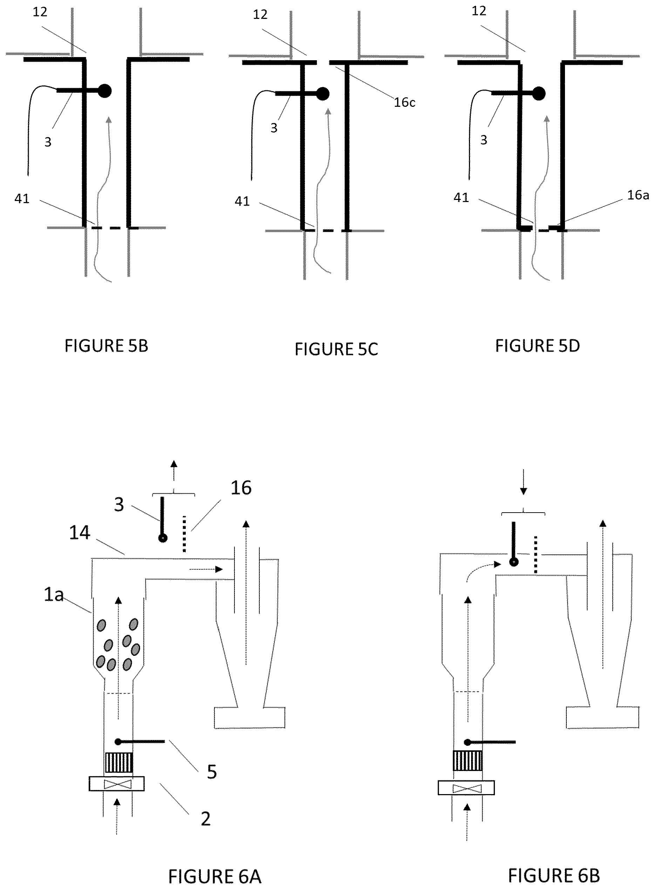

Figures **5B to 5D** illustrate simpler embodiments of calibration chambers presenting the shape of a tube.

In Figure 5B, the pressure loss is due only by the shape of the tube and its small diameter compared to the diameter of the usual roasting chamber.

In Figure 5C, the tube comprises a plate 16C pierced by at least one hole and positioned at the top of the tube upstream the probe 3.

In Figure 5D, the tube comprises a plate 16a pierced by at least one hole and positioned at the bottom of the tube.

**Figures 6A and 6B** illustrate a system according to the invention in roasting and in calibration operations respectively.

The apparatus comprises the features illustrated in Figure 3B and in Figure 4A relative to the temporary introduction of a second temperature probe 3 and of a means 16 configured to create a pressure loss of the flow of hot air while the chamber is void of coffee beans respectively. In the illustrated embodiment, this means comprises a grid but other means can be implemented like a section decrease. The probe 3 can be positioned before, after or close to the grid 16.

In Figure 6A, the temperature probe and this means are positioned aside the smoke conduit and an operation of roasting coffee beans can be implemented.

In Figure 6B, the chamber is void of beans and the temperature probe 3 and the means 16 configured to create a pressure loss of the flow of hot air are introduced inside the smoke conduit 14 in order to calibrate the apparatus.

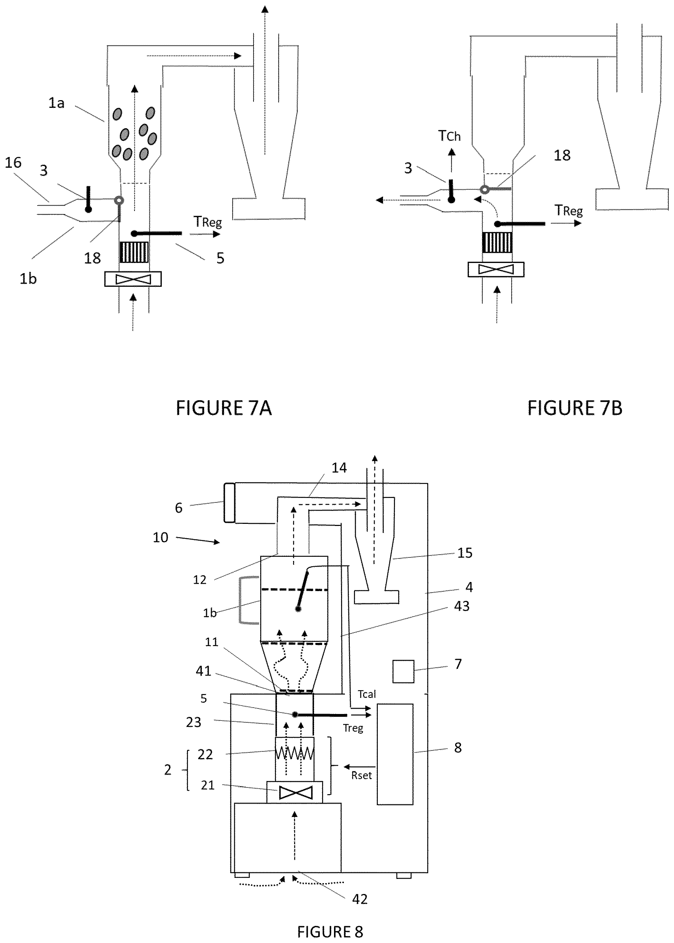

**Figures 7A and 7B** illustrate a roasting apparatus with an integrated dedicated calibration chamber in roasting and in calibration operations respectively.

The apparatus comprises a specific chamber 1b dedicated to the calibration operation in addition to the roasting chamber 1a. This calibration chamber comprises a second temperature probe 3 and means 16 to create a pressure loss in order to simulate the presence of coffee beans inside the chamber. In the illustrated embodiment, this means comprises a section decrease but other means can be implemented like a grid. The probe 3 can be positioned before, after or inside the section decrease 16.

The apparatus comprises a movable shutter 18 configured to be positioned :

- either in a first position where it closes the inlet of the calibration chamber such that hot air is able to flow to the roasting chamber only during the roasting operation of coffee beans (Figure 7A)
- or in a second position where it closes the inlet of the roasting chamber such that hot air is able to flow to the calibration chamber only during the calibration operation of the apparatus (Figure 7B).

This apparatus provides the advantage of enabling the automatic implementation of a calibration operation without the need to replace the roasting chamber by a specific calibration chamber. The calibration operation can be implemented within roasting apparatus wherein the roasting chamber is not or hardly removable like drum roasters.

Another advantage is that the during the calibration operation, temperature is measured by the second probe 3 in a conduit or chamber that is always proper and deprived of smoke deposits compared to the apparatus of Figures 6A and 6B.

Due to the introduction of a second temperature probe inside the apparatus the system enables the calibration of the heating device of the roasting apparatus. In particular, the process of calibration can be implemented as follows and in reference to **Figures 8, 9 and** 10A to 10D.

**Figure 8** illustrates a system comprising a roasting apparatus 10 similar to the roasting apparatus of Figure 1 in which the roasting chamber has been replaced by a calibration chamber 1b similar to the chamber of Figure 5 during the operation of calibration. The calibration aims at enabling the roasting apparatus 10 to reproduce coffee beans roasting recipes defined with one specific and similar master roasting apparatus M. During this calibration operation, the calibration chamber 1b is introduced inside the roasting apparatus 10 temporary.

By temporary, it is meant that this secondary temperature probe 3 is introduced during the calibration operation only or for other temporary operations (for example temporary maintenance operations to check the efficiency of the heating device) but not during the normal operation of roasting the coffee beans.

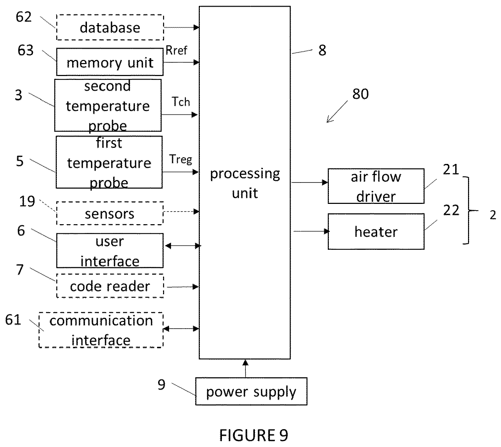

The secondary temperature probe 3 is connected to the processing unit 8 of the roasting apparatus so that the measure of the temperature inside the chamber Teal is provided as an input to the control system as illustrated in **Figure 9.**

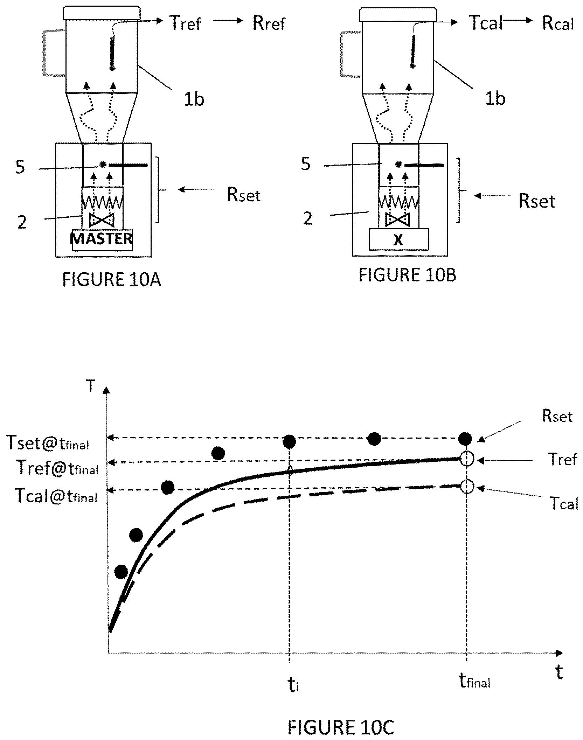

Before the calibration process of the apparatus X is initiated, in a preliminary stage, the pre-determined calibration curve $R_{ref}$ is established with the master toasting apparatus M as illustrated in Figure **10A.** It means that the same calibration chamber 1b is introduced in the master roasting apparatus.

During this stage, the heating device 2 of the roasting apparatus M is controlled to reproduce a preset curve Rset, said preset curve providing a set of points ($T_{set@ti}$ ; ti) representing the temperature $T_{set@t1}$, $T_{set@t2}$, ··· $T_{set@tfinal}$ to be applied at predefined corresponding successive times t1, t2, ..., tfinai respectively. This control is based on the temperature $T_{reg}$ regulated by the first temperature probe 5.

During the reproduction of the preset curve Rset, the temperature Tref in the chamber is measured in function of time at the temporary second temperature probe 3. This measure enables the determination of at least a set of points ($T_{ref@ti}$ ; ti) illustrated in **Figure 10C** by the curve Tref, corresponding to the pre-determined calibration curve $R_{ref}$.

In the same manner, during the calibration process illustrated in **Figure 10B,** the heating device 2 of the system of the roasting apparatus X and the calibration chamber 1b is controlled to reproduce the same preset curve Rset, This control is based on the temperature Treg regulated by the first temperature probe 5.

During the reproduction of the preset curve Rset, the temperature Teal in the chamber 1 is measured in function of time at the temporary second temperature probe 3. This measure enables the determination of at least a set of points ($T_{cal@ti}$ ; ti) illustrated in Figure 10C by the curve Teal.

In the calibration process of the roasting apparatus X, the temperature $T_{cal@ti}$ is compared with the temperature $T_{ref@ti}$ obtained with the master roasting apparatus M at at least one same time ti. Figure 10C illustrates the curves or sets of points corresponding to :

- the preset curve Rset,
- the temperature $T_{ref@ti}$ in the chamber of the master roasting apparatus during the reproduction of the preset curve Rset, establishing the pre-determined calibration curve $R_{ref}$, and
- the temperature $T_{cal@ti}$ in the chamber of the roasting apparatus X during the reproduction of the same preset curve $R_{set}$.

Figure 10C makes apparent how the reproduction of the same preset curve $R_{set}$ differs from one apparatus to another. This difference can be explained by differences in the manufacturing process.

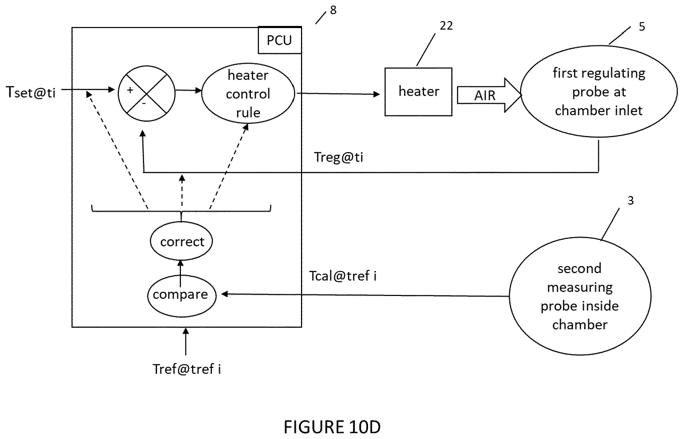

To finalise the calibration of the roasting apparatus X, based on the comparison between Tcal and Tref, a correction is applied in the feedback loop regulation_of the apparatus X so that, when the control system of the apparatus X will reproduce the preset curve Rset, the desired temperature Tref is obtained inside the chamber of the apparatus X, as illustrated schematically in **Figure 10D.**

Different types of correction can be applied depending on the relationship between Tcai and Tref. The complexity of the relationship can depend on : the differences of construction between the roasting apparatus and the master roasting apparatus such as the use of another type of heater, another shape of chamber, another control rule or algorithm to control the heater (e.g. more complex if there are 2 degrees of control on air flow driver and heater) providing for example a more sensitive control.

The relation is usually determined though regression analysis and implemented by means of a regression analysis software using well-known analysis models such as linear regression, multiple regression, non-linear regression, polynomial regression, ...

Once the relationship between Tcai and Tref is defined, a correction can be applied to the rule or algorithm applied by the feedback loop regulation. The correction can be applied at different steps of this rule depending on the complexity of this rule. In the simplest embodiments, preferably the correction is applied to the temperature Treg measured by the first temperature probe 5 or to the temperatures $T_{@ti}$ provided by the roasting curves to be reproduced.

In the case of roasters M and X illustrated in Figures 10A and 10B , where both roasters comprise very similar components with a simple feedback loop control operating the heater 22 only based on the temperature measured by the temperature probe 5 a factor of correction can be defined through the ratio K at time tfinai :

$$\frac{T_{cal@tfinal}}{T_{ch@tfinal}}$$

This ratio can be used as simple multiplication factor of the temperature $T_{@ti}$ provided by the roasting curves to be reproduced before being compared to Treg in the feedback loop regulation.

In another embodiment of the invention, the inverse of the above ratio, that is $\frac{1}{K}$ , can be used as multiplication factor of the temperature Treg measured by the first temperature probe 5, before this temperature being compared to

$T_{@ti}$ in the feedback loop regulation.

The correction enables the control system of the apparatus X to supply hot air inside the chamber at a temperature that is closer to the temperature Tref obtained in the master apparatus..

Accordingly, further to the calibration process, during roasting operation with the roasting apparatus X, predefined coffee beans roasting recipes R defined for specific beans with the master roasting apparatus M can be reproduced accurately by the control system applying the above ratio to the measure of the temperature regulated at the first probe 5 to control the heating device 5 or to the temperature $T_{@ti}$ provided by the roasting curves to be reproduced.

The calibration process can be applied with different alternatives relative to :

- the type of comparison between the temperatures Tref and $T_{cal}$, and/or
- the implementation of iteration in the calibration process reiterating the process with even more precise correction and/or
- the type of preset curve $R_{set}$ used in the process.

These alternatives can provide more or less accuracy to the calibration and the further consistent reproduction of roasting recipes.

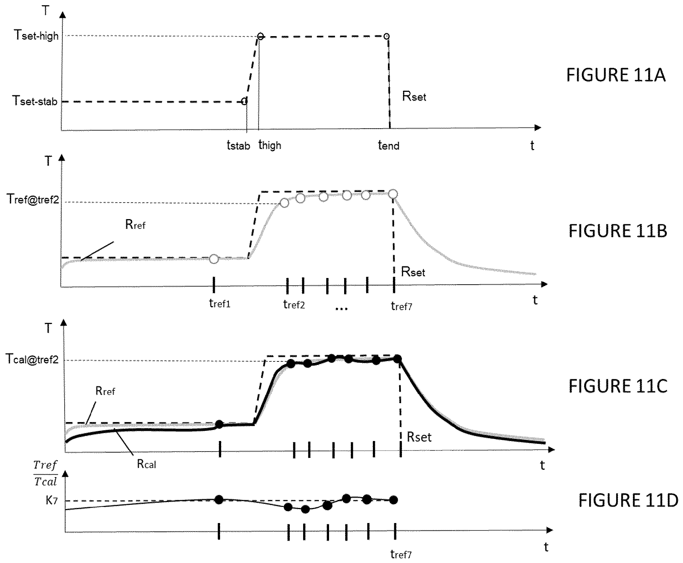

Figures **11A to 11D** illustrate alternative curves that can be used and obtained in the embodiment illustrated in Figures 10A and 10B.

**Figure 11A** illustrates the preferred profile of a preset curve $R_{set}$ that does not need to reproduce a profile corresponding to a roasting recipe. Preferably, this curve provides a set of points ($T_{set@tset}$ i ; $t_{set}$ i) and comprises successively :

- in a first phase, a plateau of the temperature $T_{set}$ at a fixed temperature Tset-stab, then
- in a second phase, an increase of temperature $T_{set}$ from Tset-stab to a higher temperature Tset-high, then
- in a third phase, a plateau of the temperature $T_{set}$ at said temperature Tset-high.
- in a fourth phase, a cooling during which heating is stopped.

Consequently, this preset curve $R_{set}$ can be defined with three points : (Tset-stab ; tstab), (Tset-high ; thigh) and (Tset-high, tend).

As mentioned earlier, in the first phase, the fixed temperature Tset-stab is preferably defined as a temperature that can be rapidly reached by the roasting apparatus whatever the ambient temperature of the room where it is used, for example a temperature of about 40°C. The length of this first phase must be sufficient to enable the heating of cold apparatus or the cooling of hot apparatus (if it has been previously used) until a stabilisation state. The length can vary from one type of apparatus to another, in particular from the power of the heating device, the heat exchange with the outside.

Generally few minutes can be sufficient.

In the second and third phases, the temperature Tset-high to be reached and maintained can depend again on the on the type of heating device used in the roasting apparatus, and in particular on the type of regulation of the power provided to the heating device. For an electric heating device where the air blower is kept at the same speed and where regulation is operated by adapting the power of the electrical resistance only, the temperature Tset-high is preferably set in a stable operating zone of the electrical resistance. Accordingly, maintaining the electrical resistance in said zone does not create important deviations during the regulation.

The presence of a plateau in the third phase enables the stabilisation of temperature and a more reliable comparison with $R_{cal}$ along this plateau rather than in zone of fast change of temperature like in the increase at the beginning the second phase.

In a roasting apparatus such as illustrated in Figure 1, the curve $R_{set}$ can be defined as follows :

- T set-stab = 40°C
- t stab in the range of 7 to 10 minutes
- T set-high in the range of 100 to 200°C
- t end in the range of 4 to 6 minutes.

**Figure 11B** illustrates the curve $R_{ref}$ obtained during the implementation of the first preliminary stage (such as illustrated in Figure 10A) where the preset curve $R_{set}$ is reproduced in the master roasting apparatus M based on the temperature measured with the first temperature probe 5, and where simultaneously the temperature Tref is measured in the chamber by a second temporary probe 3 of the calibration chamber 1b. A calibration curve $R_{ref}$ comprising a set of points ($T_{ref@ti}$ ; ti) representing Tref in function of time is determined as illustrated by white dots. Preferably, the points are determined at predefined times tref i that are in the parts of the curve $R_{set}$ comprising a plateau.

As illustrated in Figure 11B, at least one predefined time tref $_1$ is defined in the first phase and at least two predefined time tref $_2$ to tref $_7$ are defined in the third phase.

**Figure 11C** illustrates the curve Real obtained during the implementation of the calibration process of the roasting apparatus X where the heating device of the apparatus X is controlled in order to reproduce the curve $R_{set}$ based on the measure of temperature with the first temperature probe 5, and where simultaneously the temperature Tcal is measured in the calibration chamber 1b by the second temporary probe 3 (as illustrated in Figure 10B). A curve Real comprising a set of points ($T_{cal@ti}$ ; ti) representing Tcal in function of time is established as illustrated and Tcal is measured at the predefined times tref i establishing a set of points ($T_{cal@tref}$ i ; tref i) representing Tcal in function of time as illustrated by black dots.

In the embodiment of Figure 11C, during the reproduction of the preset curve Rset, at the predefined times tref i, the corresponding temperatures $T_{ref@tref}$ i and $T_{cal@tref}$ i can be compared and a correction is immediately applied inside the control system of the roasting apparatus.

In one preferred embodiment, illustrated by the curve in **Figure 11D,** during the reproduction of the preset curve $R_{set}$ by the apparatus X, at predefined times tref i (as determined in Figure 11C), the corresponding ratio $T_{ref@tref}$ i/$T_{cal@tref}$ i is calculated and a factor of correction is immediately applied to the temperatures $T_{set@ti}$ to be reproduced by the roasting apparatus X, said factor of correction corresponding to the ratio Ki defined as follows :

$$K_i = \prod_{n=1}^{i} \frac{T_{ref@tref\,n}}{T_{cal@tref\,n}}$$

Figure 11D illustrates the evolution of this ratio Ki at the different predefined times tref i. The immediate application of the correction in the control system after each calculated ratio enables the determination of a convergent value for this ratio in one single operation of calibration.

This final convergent value K7 obtained at tcal7 is used to calibrate the roasting apparatus by applying said multiplication factor to the temperatures $T_{@ti}$ of the roasting curves established with the master roasting apparatus M and to be reproduced by the roasting apparatus X.

Alternatively, the final convergent value K7 obtained at $t_{cal7}$ can be used to calibrate the roasting apparatus by applying the multiplication factor $\dfrac{1}{K7}$ to the temperature $T_{reg}$ measured by the first temperate probe 5 inside the control system of the roasting apparatus X. Depending on the evolution of the convergence of the calculated ratio K to a fixed value, the process of calibration can be stopped earlier.

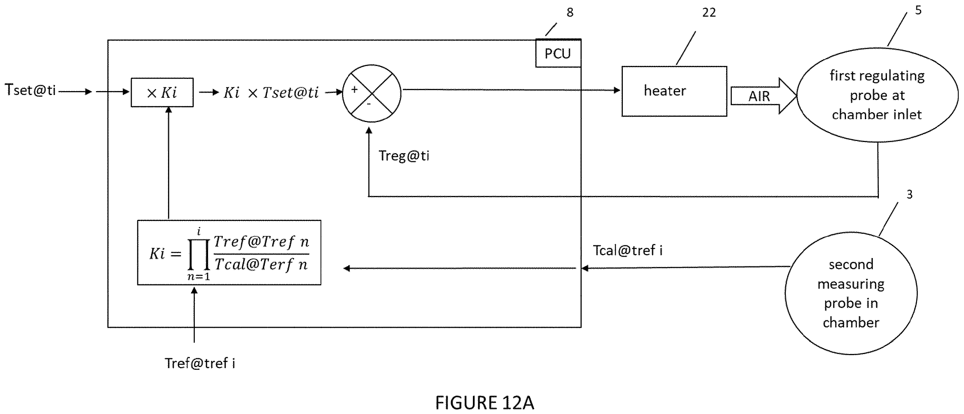

**Figure 12A** illustrates the closed feedback loop of the temperature regulation during the process of calibration illustrated in Figure 10B and Figures 11A to 11D.

During the reproduction of the preset curve Rset, at the predefined times tref i (i = 1 to n), the temperature $T_{cal@tref}$ i is measured in the chamber at the second temperature probe 3 and is inputted in the control unit 8. It is compared to the corresponding predetermined temperature $T_{ref@tref}$ i , here the comparison consists in calculating the ratio Ki as follows :

$$K_i = \prod_{n=1}^{i} \frac{T_{ref@tref\,n}}{T_{cal@tref\,n}}$$

Then, this ratio Ki is immediately used to correct the temperature $T_{set}$ inside the feedback loop of the temperature regulation : accordingly, in the illustrated example the inputted value $T_{set@ti}$ is inputted as *Ki × Tset@ti* when compared to $T_{reg@ti}$ in the feedback loop.

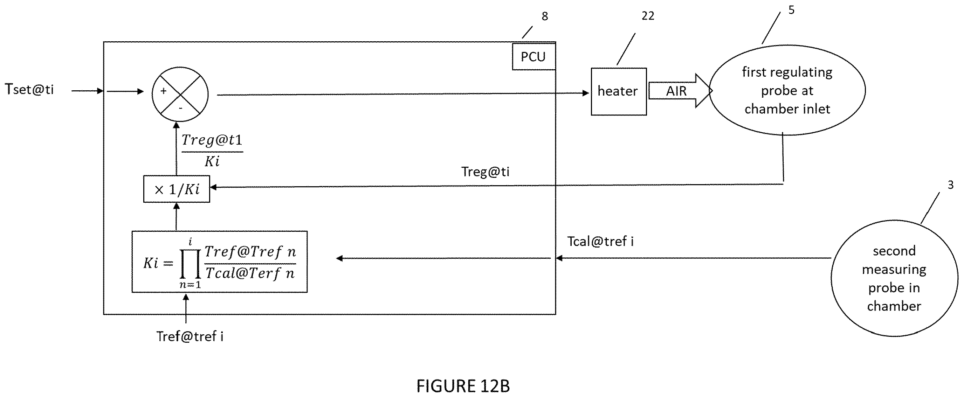

**Figure 12B** illustrates an alternative method of calibration to the one implemented in Figure 12A. Figure 12B illustrates the closed feedback loop of the temperature regulation during the process of calibration illustrated in Figure 10B and Figures 11A to 11D.

During the reproduction of the preset curve Rset, at the predefined times tref i (i = 1 to n), the temperature $T_{cal@tref}$ i is measured in the chamber at the second temperature probe 3 and is inputted in the control unit 8. It is compared to the corresponding predetermined temperature $T_{ref@tref}$ i , here the comparison consists in calculating the ratio Ki as follows :

$$K_i = \prod_{n=1}^{i} \frac{T_{ref@trefn}}{T_{cal@trefn}}$$

Then, this ratio Ki is immediately used to correct the temperature Treg inside the feedback loop of the temperature regulation : accordingly, in the illustrated example the measured value $T_{reg@ti}$ is inputted as $\frac{Treg@ti}{Ki}$ when compared to $T_{set@ti}$ in the feedback loop.

In the process illustrated in Figures 10A, 10B, 11A to 11D and 12A and 12B, if the apparatus X to be calibrated is part of a series of similar manufactured apparatuses for which calibration method has already been implemented, then a preset factor $K_0$ could be pre-determined for that series. Accordingly, in order to shorten the process of calibration of the apparatus X, this factor $K_0$ could be used in the calculation of the factor of correction illustrated in Figure 8D as follows :

$$K_i = K_0 \prod_{n=1}^{i} \frac{T_{ref@trefn}}{T_{cal@trefn}}$$

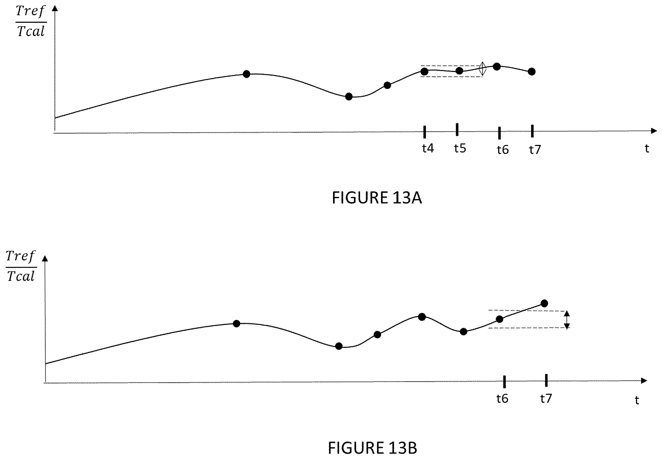

**Figures 13A and 13B** illustrate two different situations.

Figure 13A illustrates the situation where the successive calculated ratios $T_{ref@tref\,i}/T_{cal@tref}$ i become closer one to the other with time. It can be set that, if at one tref i, the corresponding calculated ratio $T_{ref@tref\,i}/T_{cal@tref}$ i differs by less than 2 % from the previous calculated ratio $T_{ref@tref\,i-1}/T_{cal@tref\,i-1}$, then the reproduction of the preset curve $R_{set}$ as illustrated in Figure 11C can be stopped. The last calculated ratio Ki can be used as the factor of correction of the apparatus X. In the illustrated curve, the ratio $T_{ref@tref\,5}/T_{cal@tref\,5}$ is very close to $T_{ref@tref\,4}/T_{cal@tref\,4}$, meaning that the step c) of the calibration process can be stopped at teals already.

Figure 13B illustrates the situation where the successive calculated ratio $T_{ref@tref\,i}/T_{cal@tref}$ i do not converge. It can be set that, if at successive tref i, the corresponding calculated ratio $T_{ref@tref\,i}/T_{cal@tref}$ i increases by more than 20 %, then the calibration process is stopped. In the illustrated curve, the ratio $T_{ref@tref\,i}/T_{cal@tref}$ i does not converge after t6 meaning that a factor K cannot be defined. The process of calibration is failing and must be stopped. Such a situation reveals that the method has not been operated correctly or the apparatus is broken or presents such a default that it cannot be operated normally and calibrated.

It can be suggested to re-start the calibration process. If the calibration process fails again, maintenance shall be required.

The operator can be guided to implement these different steps through the display of the apparatus in an automatic manner.

Alternatively, it can be estimated that the successive calculated ratios do not converge when the ratios reach pre-determined upper and lower values, such as for example inferior to 0.5 or superior to 2. If such ratios are monitored, then the process is stopped.

The reference curve $R_{ref}$ determined with the master apparatus is always established in the same conditions that are used in the calibration process for the system comprising the roasting apparatus X that is a master apparatus presenting the same means to simulate beans and measure the temperature or using the same calibration jug.

In the above described embodiments of the calibration process, the value of the temperature $T_{cal@ti}$ measured at the second temperature probe 3 can be adjusted to an adjusted value $T_{cal@ti-adjusted}$ that is specific to said second temperature probe.

This adjustment of the temperature is not necessary if there is only one single second temporary probe 3 to determine the pre-determined reference curve $R_{ref}$ obtained with the master roasting apparatus and to calibrate all the roasting apparatuses subsequently, as illustrated in the preliminary step 6b and the calibration step 6c of Figure 6.

Yet, when multiple different second temporary probes 3 or temporary calibration chambers exist (which becomes necessary when an important number of roasting apparatuses are commercialised), the measures of these probes or chambers are compared to the measures of the original second temporary probe 3 or to another already calibrated second temporary probe 3. Based on this comparison, a new second temporary probe 3 can be used in a calibration process of a roasting apparatus such as described above.

Preferably,

- the value of the temperature $T_{cal@ti}$ measured at the new second temperature probe at step c) can be adjusted to an adjusted value $T_{cal@ti-adjusted}$, and

- in step d) this adjusted value $T_{cal@ti-adjusted}$ can be compared with the temperature $T_{ref@ti}$. For the operation of comparison of the measures of new second temporary probe with the measures of the original second temporary probe 3 or to another already calibrated second temporary probe 3, a temperature versus time curve of reference is reproduced, for example a curve such as illustrated in Figure 8A. Then, based on this comparison, the adjustment of the measure of temperature of the new second temporary probe can be defined.

Different types of adjustment can be applied depending on the relationship between the temperatures of the two probes. The complexity of the relationship can depend on : the differences of construction between them such as the use of a new type of probe, another shape of chamber, a new position of the probe inside the temporary chamber, ...

The relation can be determined though regression analysis and implemented by means of a regression analysis software using well-known analysis models such as linear regression, multiple regression, non-linear regression, polynomial regression, ...

In one preferred process :

$$T_{cal@ti-adjusted} = K2probe.(T_{cal@ti})^2 + K1probe.T_{cal@ti} + T_{probe}$$

wherein the preset temperature offset $T_{probe}$ and the preset temperature ratios $K_1probe$ and $K2probe$ are defined by regression analysis software.

The calibration process of the present invention was implemented on a model of roasting apparatuses presenting the features of the apparatus of Figure 1.

A series of roasting apparatuses was produced as copies of the master roasting apparatus with which roasting recipes were established. Without applying the calibration process to the roasting apparatuses of the series similar to the master roasting apparatus, it was observed that the roasting of same beans according to the same roasting recipe produced roasted beans of different colours from one apparatus to another which was the evidence of absence of consistent roasting. The measure of the temperature inside the chambers of these different apparatus showed a difference of about 10 % with the master apparatus, that is a difference of 20 to 25°C when a temperature of 200°C was requested.

By implementing the calibration method with a calibration jug as illustrated in Figure 5 in each roasting apparatuses of the series, this difference was reduced to about 1°C and it was confirmed that beans of same colour were obtained.

The system of the present invention presents the advantage of enabling the calibration of roasting apparatuses without the use of beans and without dirtying the apparatus.

Advantageously, the system provides an external and temporary calibration temperature probe that can be positioned in a reproducible manner inside the apparatus to calibrate the resting apparatus whenever necessary. The means configured to create a pressure loss of the flow of hot air in order to simulate the presence of coffee beans enables the reproduction of the temperature inside the chamber as if beans were present and the secondary temperature probe is able the measure accurately the temperature supported by said beans when a recipe is applied. The comparison with the temperature measured in the same conditions with the master apparatus enables the correction of the heating devices of similar roasting apparatuses by comparison.

Although the invention has been described with reference to the above illustrated embodiments, it will be appreciated that the invention as claimed is not limited in any way by these illustrated embodiments.

Variations and modifications may be made without departing from the scope of the invention as defined in the claims.

As used in this specification, the words "comprises", "comprising", and similar words, are not to be interpreted in an exclusive or exhaustive sense. In other words, they are intended to mean "including, but not limited to".

List of references in the drawings :

| | |
|---|---|
| roasting apparatus | 10 |
| roasting chamber | 1a |
| bottom opening | 11 |
| top opening | 12 |

(continued)

| | | |
|---|---|---|
| | probe opening | 13 |
| | calibration chamber | 1b |
| heating device | | 2 |
| | air flow driver | 21 |
| | heater | 22 |
| | passage | 23 |
| second temperature probe | | 3 |
| housing | | 4 |
| | air outlet hole | 41 |
| | air inlets | 42 |
| | vertical housing part | 43 |
| first temperature probe | | 5, 51 |
| user interface | | 6 |
| code reader | | 7 |
| processing unit | | 8 |
| control system | | 80 |
| power supply | | 9 |
| smoke conduit | | 14 |
| probe opening | | 141 |
| chaff collector | | 15 |
| restricting means | | 16, 16a, 16b, 16c |
| inert granular objects | | 17 |
| shutter | | 18 |
| sensor | | 19 |
| communication interface | | 61 |
| database | | 62 |
| memory unit | | 63 |

**Claims**

1. Coffee beans roasting system comprising :

- a coffee beans roasting apparatus (10), said apparatus comprising :

. a chamber (1) dedicated to roasting of coffee beans,
. a heating device (2) to supply a flow of hot air to the chamber,
. at least one first temperature probe (5) to regulate the temperature of air supplied by the heating device, said first temperature probe being positioned outside the chamber,
. a control system (80) configured to control the heating device and configured to reproduce roasting curves each of said roasting curves providing a set of points ($T_{@ti}$ ; ti) representing the temperature to be applied at discrete successive times $t_i$, respectively, said control of the heating device being based on the temperature Treg regulated by the at least one first temperature probe,
**characterised in that** it further comprises:

- at least one second temperature probe (3) configured to be introduced temporary inside the roasting apparatus to measure the temperature inside the roasting chamber, and
- at least one means configured to create a pressure loss of the flow of hot air while the chamber is void of coffee beans in order to simulate the presence of coffee beans inside the chamber during a roasting operation.

2. Coffee beans roasting system according to the precedent claim, wherein :

- the heating device (2) of the roasting apparatus comprises an air flow driver (21) and a heater (22) and the control system of the roasting apparatus is configured to operate said air flow driver to adjust the flow of air, and

- the means configured to create a pressure loss of the flow of hot air while the chamber is void of coffee beans is the air flow driver (21).

3. Coffee beans roasting system according to Claim 1 or 2, wherein the means configured to create a pressure loss of the flow of hot air while the chamber is void of coffee beans comprises at least one removable device designed to restrict the flow of hot air inside and/or downstream the chamber (16, 16a, 16b, 16c), optionally said at least one removable device designed to restrict the flow of air comprises a grid, a mesh, a plate with at least one hole and/or a pipe with a venturi design.

4. Coffee beans roasting system according to the Claim 3, wherein the at least one removable device designed to restrict the flow of hot air inside and/or downstream the chamber is an integrated and movable part of the coffee beans roasting apparatus (10), and the roasting apparatus comprises means configured to move the at least one device and to position said device temporary and removably inside or at the outlet of the chamber of the roasting apparatus.

5. Coffee beans roasting system according to Claim 3, wherein :

- the dedicated roasting chamber (1a) of the coffee beans roasting apparatus is removable from the roasting apparatus, and
- the coffee beans roasting apparatus comprises an area designed to receive and hold said removable dedicated roasting chamber, and
- the at least one removable device designed to restrict the flow of hot air inside and/or downstream the chamber is part of a calibration chamber (1b), said calibration chamber being configured to be introduced removably inside the holding and receiving area in place of the dedicated chamber.

6. Coffee beans roasting system according to the Claim 3, wherein the means configured to create a pressure loss of the flow of hot air while the chamber is void of coffee beans comprises granular inert objects (17), said granular inert objects being designed to simulate coffee beans.

7. Coffee beans roasting system according to any one of the precedent claims, wherein the roasting apparatus comprises means configured to position said at least one second temperature probe (3) temporary and removably inside or at the outlet of the chamber of the roasting apparatus.

8. Coffee beans roasting system according to the precedent claim, wherein the at least one second temperature probe (3) is an integrated part of the coffee beans roasting apparatus (10) and the roasting apparatus comprises means to move said at least one second probe in the conduit connected to the outlet of the chamber.

9. Coffee beans roasting system according to the Claim 7, wherein the at least one second temperature probe (3) is a device external to the coffee beans roasting apparatus (10) and the coffee beans apparatus comprises an opening designed to introduce the at least one second temperature probe (3) in an airtight manner inside the chamber or in the conduit (14) connected to the outlet of the chamber.

10. Coffee beans roasting system according to Claim 7, wherein :

- the dedicated roasting chamber (1a) of the coffee beans roasting apparatus is removable from the roasting apparatus, and
- the coffee beans roasting apparatus comprises an area designed to receive and hold the removable dedicated chamber, and
- the at least one second temperature probe (3) is part of a calibration chamber (1b), said calibration chamber being configured to be introduced inside the holding and receiving area in place of the dedicated roasting chamber.

11. Coffee beans roasting system according to Claim 1 wherein the coffee beans roasting apparatus (10) comprises :

- a chamber (1b) dedicated to calibration, said calibration chamber comprising :

. the at least one second temperature probe (3),
. and optionally at least one device designed to restrict the flow of air in order to simulate the presence of coffee beans inside the chamber during a roasting operation,
and

- means to guide the flow of hot air supplied by the heating device (2) either to the chamber (1a) dedicated to roasting of coffee beans or to the chamber (1b) dedicated to calibration.

12. Coffee beans roasting system according to any one of the precedent claims, wherein the control system (80) of the roasting apparatus is configured :

- to receive input of measured temperature by said second temperature probe, and
- to implement a calibration process of the roasting apparatus (10) based on said input.

13. Calibration chamber (1b) configured to be introduced in place of the roasting chamber (1a) of a coffee beans roasting apparatus, said coffee beans roasting apparatus (10) comprising :

. a roasting chamber (1a) to contain coffee beans, said chamber being removable,
. a heating device (2) to supply a flow of hot air to the chamber,
. at least one first temperature probe (5) to regulate the temperature of air supplied by the heating device, said first temperature probe being positioned outside the chamber,
. a control system (80) configured to control the heating device and configured to reproduce roasting curves each of said roasting curves providing a set of points ($T_{@ti}$ ; ti) representing the temperature to be applied at discrete successive times $t_i$, respectively, said control of the heating device being based on the temperature Treg regulated by the at least one first temperature probe,

said calibration chamber comprising :

- at least one second temperature probe (3).

14. Calibration chamber according to the precedent claim wherein said calibration chamber comprises at least one device designed to restrict the flow of hot air inside said calibration chamber, optionally said calibration chamber comprises :

- a first plate (16a) pierced by holes and positioned at the bottom of the calibration chamber,
- a second plate (16c) pierced by holes and positioned downstream the at least one second temperature probe (3), the holes being designed to lead the flow of air to converge to the at least one second temperature probe,
- a third plate (16b) pierced by holes and positioned between the fist plate and the at least one second temperature probe.

15. Calibration chamber according to Claim 13 wherein said calibration chamber is a tube, said tube presenting a transversal section inferior to the transversal section of the roasting chamber of the roasting apparatus, optionally said tube comprises :

- a first plate (16a) pierced by at least one hole and positioned at the bottom of the calibration chamber, and/or
- a second plate (16c) pierced by at least one hole and positioned downstream the at least one second temperature probe (3).

16. Process for calibrating the roasting apparatus of a system according to any one of Claims 1 to 12 comprising the steps of:

a - introducing temporary the at least one second temperature probe (3) inside the roasting apparatus,
b - while the chamber is void of beans, controlling the heating device to reproduce a preset curve Rset, said preset curve providing a series of points ($T_{set@ti}$ ; ti) representing the temperature $T_{set@t1}$, $T_{set@t2}$, ... $T_{set@tfinal}$ to be applied at preset corresponding successive times t1, t2, ..., tfinai respectively, said control being based on the temperature Treg measured by the at least one first temperature probe (5),
and creating a pressure loss of the flow of hot air in order to simulate the presence of coffee beans inside the chamber during said reproduction of the preset curve Rset,

c - during the reproduction of the preset curve Rset, measuring the temperature Teal in function of time inside the chamber at the at least one second temperature probe enabling the determination of at least a set of points ($T_{cal@ti}$ ; ti),

d - comparing the temperature $T_{cal@ti}$ measured at at least one time ti with the temperature $T_{ref@ti}$ at said same time ti of a pre-determined reference curve $R_{ref}$ obtained with the master roasting apparatus (M), said reference curve $R_{ref}$ representing the temperature Tref measured in the chamber of the specific master apparatus (M) while controlling the heating device of the master apparatus to reproduce said preset curve Rset,

e - based on this comparison, calibrating the roasting apparatus (X) by applying a correction to the feedback loop regulation, preferably by applying a correction to the temperature Treg measured by the first temperature probe (5) or by applying a correction to the temperatures $T_{@ti}$ provided by the roasting curves to be reproduced by the roasting apparatus (X).

**Patentansprüche**

1. Kaffeebohnen-Röstsystem, umfassend:

 - eine Kaffeebohnen-Rösteinrichtung (10), wobei die Einrichtung umfasst:

   . eine Kammer (1), die zum Rösten von Kaffeebohnen bestimmt ist,
   . eine Heizvorrichtung (2) zum Zuführen eines Heißluftstroms zu der Kammer,
   . mindestens eine erste Temperatursonde (5), um die Temperatur der von der Heizvorrichtung zugeführten Luft zu regulieren, wobei die erste Temperatursonde außerhalb der Kammer positioniert ist,
   . ein Steuerungssystem (80), das dazu konfiguriert ist, die Heizvorrichtung zu steuern, und dazu konfiguriert ist, Röstkurven zu reproduzieren, wobei jede der Röstkurven einen Satz von Punkten bereitstellt ($T@_{ti}$; 1i), der die Temperatur darstellt, die zu diskreten aufeinanderfolgenden Zeiten $t_i$ anzuwenden ist, wobei die Steuerung der Heizvorrichtung auf der Temperatur $T_{reg}$ basiert, die durch die mindestens eine erste Temperatursonde reguliert wird,

 **dadurch gekennzeichnet, dass** es ferner umfasst:

   - mindestens eine zweite Temperatursonde (3), die dazu konfiguriert ist, vorübergehend in die Rösteinrichtung eingeführt zu werden, um die Temperatur innerhalb der Röstkammer zu messen, und
   - mindestens ein Mittel, das dazu konfiguriert ist, einen Druckverlust des Heißluftstroms zu erzeugen, während sich keine Kaffeebohnen in der Kammer befinden, um das Vorhandensein von Kaffeebohnen innerhalb der Kammer während eines Röstvorgangs zu simulieren.

2. Kaffeebohnen-Röstsystem nach dem vorstehenden Anspruch, wobei:

 - die Heizvorrichtung (2) der Rösteinrichtung einen Luftströmungstreiber (21) und ein Heizelement (22) umfasst und das Steuerungssystem der Rösteinrichtung dazu konfiguriert ist, den Luftströmungstreiber zum Einstellen des Luftstroms zu betreiben, und
 - das Mittel, das dazu konfiguriert ist, einen Druckverlust des Heißluftstroms zu erzeugen, während sich keine Kaffeebohnen in der Kammer befinden, der Luftströmungstreiber (21) ist.

3. Kaffeebohnen-Röstsystem nach Anspruch 1 oder 2, wobei das Mittel, das dazu konfiguriert ist, einen Druckverlust des Heißluftstroms zu erzeugen, während sich keine Kaffeebohnen in der Kammer befinden, mindestens eine abnehmbare Vorrichtung umfasst, die dazu ausgelegt ist, den Heißluftstrom innerhalb und/oder stromabwärts der Kammer (16, 16a, 16b, 16c) einzuschränken, wobei optional die mindestens eine abnehmbare Vorrichtung, die dazu ausgelegt ist, den Luftstrom einzuschränken, ein Gitter, ein Netz, eine Platte mit mindestens einem Loch und/oder ein Rohr mit Venturi-Design umfasst.

4. Kaffeebohnen-Röstsystem nach Anspruch 3, wobei die mindestens eine abnehmbare Vorrichtung, die dazu ausgelegt ist, den Heißluftstrom innerhalb und/oder stromabwärts der Kammer einzuschränken, ein integrierter und beweglicher Teil der Kaffeebohnen-Rösteinrichtung (10) ist und die Rösteinrichtung Mittel umfasst, die dazu konfiguriert sind, die mindestens eine Vorrichtung zu bewegen und die Vorrichtung vorübergehend und abnehmbar innerhalb oder am Auslass der Kammer der Rösteinrichtung zu positionieren.

5. Kaffeebohnen-Röstsystem nach Anspruch 3, wobei:

- die bestimmte Röstkammer (1a) der Kaffeebohnen-Rösteinrichtung von der Rösteinrichtung abnehmbar ist, und
- die Kaffeebohnen-Rösteinrichtung einen Bereich umfasst, der dazu ausgelegt ist, die abnehmbare bestimmte Röstkammer aufzunehmen und zu halten, und
- die mindestens eine abnehmbare Vorrichtung, die dazu ausgelegt ist, den Heißluftstrom innerhalb und/oder stromabwärts der Kammer einzuschränken, Teil einer Kalibrierungskammer (1b) ist, wobei die Kalibrierungskammer dazu konfiguriert ist, innerhalb des Halte- und Aufnahmebereichs anstelle der bestimmten Kammer abnehmbar eingeführt zu werden.

6. Kaffeebohnen-Röstsystem nach Anspruch 3, wobei das Mittel, das dazu konfiguriert ist, einen Druckverlust des Heißluftstroms zu erzeugen, während sich keine Kaffeebohnen in der Kammer befinden, körnige inerte Objekte (17) umfasst, wobei die körnigen inerten Objekte dazu ausgelegt sind, Kaffeebohnen zu simulieren.

7. Kaffeebohnen-Röstsystem nach einem der vorstehenden Ansprüche, wobei die Rösteinrichtung Mittel umfasst, die dazu konfiguriert sind, die mindestens eine zweite Temperatursonde (3) vorübergehend und abnehmbar innerhalb oder am Auslass der Kammer der Rösteinrichtung zu positionieren.

8. Kaffeebohnen-Röstsystem nach dem vorstehenden Anspruch, wobei die mindestens eine zweite Temperatursonde (3) ein integrierter Teil der Kaffeebohnen-Rösteinrichtung (10) ist und die Rösteinrichtung Mittel umfasst, um die mindestens eine zweite Sonde in dem Kanal zu bewegen, der mit dem Auslass der Kammer verbunden ist.

9. Kaffeebohnen-Röstsystem nach Anspruch 7, wobei die mindestens eine zweite Temperatursonde (3) eine Vorrichtung außerhalb der Kaffeebohnen-Rösteinrichtung (10) ist und die Kaffeebohneneinrichtung eine Öffnung umfasst, die dazu ausgelegt ist, die mindestens eine zweite Temperatursonde (3) in die Kammer oder in den mit dem Auslass der Kammer verbundenen Kanal (14) luftdicht einzuführen.

10. Kaffeebohnen-Röstsystem nach Anspruch 7, wobei:

- die bestimmte Röstkammer (1a) der Kaffeebohnen-Rösteinrichtung von der Rösteinrichtung abnehmbar ist, und
- die Kaffeebohnen-Rösteinrichtung einen Bereich umfasst, der dazu ausgelegt ist, die abnehmbare bestimmte Kammer aufzunehmen und zu halten, und
- die mindestens eine zweite Temperatursonde (3) Teil einer Kalibrierungskammer (1b) ist, wobei die Kalibrierungskammer dazu konfiguriert ist, in den Halte- und Aufnahmebereich anstelle der bestimmten Röstkammer eingeführt zu werden.

11. Kaffeebohnen-Röstsystem nach Anspruch 1, wobei die Kaffeebohnen-Rösteinrichtung (10) umfasst:

- eine zur Kalibrierung bestimmte Kammer (1b), wobei die Kalibrierungskammer umfasst:

. die mindestens eine zweite Temperatursonde (3),
. und optional mindestens eine Vorrichtung, die dazu ausgelegt ist, den Luftstrom einzuschränken, um das Vorhandensein von Kaffeebohnen innerhalb der Kammer während eines Röstvorgangs zu simulieren, und
- Mittel zum Leiten des Heißluftstroms, der von der Heizvorrichtung (2) zugeführt wird, entweder zur Kammer (1a), die zum Rösten von Kaffeebohnen bestimmt ist, oder zur Kammer (1b), die zur Kalibrierung bestimmt ist.

12. Kaffeebohnen-Röstsystem nach einem der vorstehenden Ansprüche, wobei das Steuerungssystem (80) der Rösteinrichtung konfiguriert ist zum:

- Empfangen eines Eingangs der gemessenen Temperatur durch die zweite Temperatursonde, und
- Implementieren eines Kalibrierungsprozesses der Rösteinrichtung (10) basierend auf dem Eingang.

13. Kalibrierungskammer (1b), die dazu konfiguriert ist, anstelle der Röstkammer (1a) einer Kaffeebohnen-Rösteinrichtung eingeführt zu werden, wobei die Kaffeebohnen-Rösteinrichtung (10) umfasst:

. eine Röstkammer (1a), die Kaffeebohnen enthält, wobei die Kammer abnehmbar ist,

. eine Heizvorrichtung (2) zum Zuführen eines Heißluftstroms zu der Kammer,

. mindestens eine erste Temperatursonde (5), um die Temperatur der von der Heizvorrichtung zugeführten Luft zu regulieren, wobei die erste Temperatursonde außerhalb der Kammer positioniert ist,

. ein Steuerungssystem (80), das dazu konfiguriert ist, die Heizvorrichtung zu steuern, und dazu konfiguriert ist, Röstkurven zu reproduzieren, wobei jede der Röstkurven einen Satz von Punkten bereitstellt ($T@_{ti}$; ti), der die Temperatur darstellt, die zu diskreten aufeinanderfolgenden Zeiten $t_i$ anzuwenden ist, wobei die Steuerung der Heizvorrichtung auf der Temperatur $T_{reg}$ basiert, die durch die mindestens eine erste Temperatursonde reguliert wird,

wobei die Kalibrierungskammer umfasst:

- mindestens eine zweite Temperatursonde (3).

14. Kalibrierungskammer nach dem vorstehenden Anspruch, wobei die Kalibrierungskammer mindestens eine Vorrichtung umfasst, die dazu ausgelegt ist, den Heißluftstrom innerhalb der Kalibrierungskammer einzuschränken, wobei die die Kalibrierungskammer optional umfasst:

- eine erste Platte (16a), die durchlöchert und am Boden der Kalibrierungskammer positioniert ist,
- eine zweite Platte (16c), die durchlöchert und stromabwärts der mindestens einen zweiten Temperatursonde (3) positioniert ist, wobei die Löcher dazu ausgelegt sind, den Luftstrom zu der mindestens einen zweiten Temperatursonde zu konvergieren,
- eine dritte Platte (16b), die durchlöchert und zwischen der ersten Platte und der mindestens einen zweiten Temperatursonde positioniert ist.

15. Kalibrierungskammer nach Anspruch 13, wobei die Kalibrierungskammer ein Rohr ist, wobei das Rohr einen quer verlaufenden Querschnitt aufweist, der kleiner ist als der quer verlaufende Querschnitt der Röstkammer der Rösteinrichtung, wobei das Rohr optional umfasst:

- eine erste Platte (16a), die durch mindestens ein Loch durchstochen und am Boden der Kalibrierungskammer positioniert ist, und/oder
- eine zweite Platte (16c), die durch mindestens ein Loch durchstochen und stromabwärts der mindestens einen zweiten Temperatursonde (3) positioniert ist.

16. Verfahren zum Kalibrieren der Rösteinrichtung eines Systems nach einem der Ansprüche 1 bis 12, folgende Schritte umfassend:

a- vorübergehendes Einführen des mindestens einen zweiten Temperatursonde (3) innerhalb der Rösteinrichtung,

b- während sich keine Kaffeebohnen in der Kammer befinden, Steuern der Heizvorrichtung, um eine voreingestellte Kurve $R_{set}$ zu reproduzieren, wobei die voreingestellte Kurve eine Reihe von Punkten bereitstellt ($T_{set@ti}$ ; ti), die die Temperatur $T_{set@ti}$ $T_{set@t2}$, ... $T_{set@tfinal}$ darstellen, die zu voreingestellten entsprechenden aufeinanderfolgenden Zeiten t1, t2, ..., bzw. $t_{final}$ anzuwenden ist, basierend auf der Temperatur $T_{reg}$, die von der mindestens einen ersten Temperatursonde (5) gemessen wurde,

und Erzeugen eines Druckverlusts des Heißluftstroms, um das Vorhandensein von Kaffeebohnen innerhalb der Kammer während der Reproduktion der voreingestellten Kurve $R_{set}$ zu simulieren,

c- während der Reproduktion der voreingestellten Kurve $R_{set}$, Messen der Temperatur $T_{cal}$ in Abhängigkeit von der Zeit innerhalb der Kammer an der mindestens einen zweiten Temperatursonde, die das Bestimmen mindestens eines Satzes von Punkten ermöglicht ($T_{cal@ti}$; ti),

d- Vergleichen der Temperatur $T_{cal@ti}$, die zu mindestens einem Zeitpunkt $t_i$ gemessen wurde, mit der Temperatur $T_{ref@ti}$ zu demselben Zeitpunkt $t_i$ einer vorgegebenen Referenzkurve $R_{ref}$, die mit der Master-Rösteinrichtung (M) erhalten wird, wobei die Referenzkurve $R_{ref}$ die Temperatur $T_{ref}$ darstellt, die in der Kammer der spezifischen Mastereinrichtung (M) gemessen wird, während die Heizvorrichtung der Mastereinrichtung gesteuert wird, um die voreingestellte Kurve $R_{set}$ zu reproduzieren,

e- basierend auf diesem Vergleich, Kalibrieren der Rösteinrichtung (X) durch Anwenden einer Korrektur auf die Rückkopplungsschleifenregelung, vorzugsweise durch Anwenden einer Korrektur auf die Temperatur $T_{reg}$, die mit der ersten Temperatursonde (5) gemessen wurde, oder durch Anwenden einer Korrektur auf die Temperaturen $T_{@ti}$, die von den durch die Rösteinrichtung (X) zu reproduzierenden Röstkurven bereitgestellt sind.

**Revendications**

1. Système de torréfaction de grains de café comprenant :

   - un appareil de torréfaction de grains de café (10), ledit appareil comprenant :

     . une chambre (1) dédiée à la torréfaction de grains de café,
     . un dispositif de chauffage (2) pour fournir un flux d'air chaud à la chambre,
     . au moins une première sonde de température (5) pour réguler la température de l'air fourni par le dispositif de chauffage, ladite première sonde de température étant positionnée à l'extérieur de la chambre,
     . un système de commande (80) configuré pour commander le dispositif de chauffage et configuré pour reproduire des courbes de torréfaction, chacune desdites courbes de torréfaction fournissant un ensemble de points ($T@_{ti}$ ; $t_i$) représentant la température à appliquer à des temps successifs discrets $t_i$, respectivement, ladite commande du dispositif de chauffage étant basée sur la température $T_{reg}$ régulée par l'au moins une première sonde de température,

   **caractérisé en ce qu'**il comprend en outre :

     - au moins une seconde sonde de température (3) configurée pour être introduite temporairement à l'intérieur de l'appareil de torréfaction pour mesurer la température à l'intérieur de la chambre de torréfaction, et
     - au moins un moyen configuré pour créer une perte de pression du flux d'air chaud lorsque la chambre ne contient pas de grains de café afin de simuler la présence de grains de café à l'intérieur de la chambre pendant une opération de torréfaction.

2. Système de torréfaction de grains de café selon la revendication précédente, dans lequel :

   - le dispositif de chauffage (2) de l'appareil de torréfaction comprend un dispositif d'entraînement de flux d'air (21) et un dispositif de chauffage (22) et le système de commande de l'appareil de torréfaction est configuré pour faire fonctionner ledit dispositif d'entraînement de flux d'air pour ajuster l'écoulement d'air, et
   - le moyen configuré pour créer une perte de pression du flux d'air chaud lorsque la chambre ne contient pas de grains de café est le dispositif d'entraînement de flux d'air (21).

3. Système de torréfaction de grains de café selon la revendication 1 ou 2, dans lequel le moyen configuré pour créer une perte de pression du flux d'air chaud lorsque la chambre ne contient pas de grains de café comprend au moins un dispositif amovible conçu pour restreindre le flux d'air chaud à l'intérieur et/ou en aval de la chambre (16, 16a, 16b, 16c), éventuellement ledit au moins un dispositif amovible conçu pour restreindre le flux d'air comprend une grille, une maille, une plaque avec au moins un trou et/ou un tuyau avec une conception venturi.

4. Système de torréfaction de grains de café selon la revendication 3, dans lequel l'au moins un dispositif amovible conçu pour restreindre l'écoulement d'air chaud à l'intérieur et/ou en aval de la chambre est une partie intégrée et mobile de l'appareil de torréfaction de grains de café (10), et l'appareil de torréfaction comprend un moyen configuré pour déplacer l'au moins un dispositif et pour positionner ledit dispositif temporairement et de manière amovible à l'intérieur ou au niveau de la sortie de la chambre de l'appareil de torréfaction.

5. Système de torréfaction de grains de café selon la revendication 3, dans lequel :

   - la chambre de torréfaction dédiée (1a) de l'appareil de torréfaction de grains de café peut être retirée de l'appareil de torréfaction, et
   - l'appareil de torréfaction de grains de café comprend une zone conçue pour recevoir et maintenir ladite chambre de torréfaction dédiée amovible, et
   - l'au moins un dispositif amovible conçu pour restreindre l'écoulement d'air chaud à l'intérieur et/ou en aval de la chambre fait partie d'une chambre d'étalonnage (1b), ladite chambre d'étalonnage étant configurée pour être introduite de manière amovible à l'intérieur de la zone de maintien et de réception à la place de la chambre dédiée.

6. Système de torréfaction de grains de café selon la revendication 3, dans lequel le moyen configuré pour créer une perte de pression du flux d'air chaud lorsque la chambre ne contient pas de grains de café comprend des objets inertes granulaires (17), lesdits objets inertes granulaires étant conçus pour simuler des grains de café.

**7.** Système de torréfaction de grains de café selon l'une quelconque des revendications précédentes, dans lequel l'appareil de torréfaction comprend un moyen configuré pour positionner ladite au moins une seconde sonde de température (3) temporairement et de manière amovible à l'intérieur ou au niveau de la sortie de la chambre de l'appareil de torréfaction.

**8.** Système de torréfaction de grains de café selon la revendication précédente, dans lequel l'au moins une seconde sonde de température (3) est une partie intégrée de l'appareil de torréfaction de grains de café (10) et l'appareil de torréfaction comprend un moyen pour déplacer ladite au moins une seconde sonde dans le conduit relié à la sortie de la chambre.

**9.** Système de torréfaction de grains de café selon la revendication 7, dans lequel l'au moins une seconde sonde de température (3) est un dispositif externe à l'appareil de torréfaction de grains de café (10) et l'appareil de grains de café comprend une ouverture conçue pour introduire l'au moins une seconde sonde de température (3) de manière étanche à l'intérieur de la chambre ou dans le conduit (14) relié à la sortie de la chambre.

**10.** Système de torréfaction de grains de café selon la revendication 7, dans lequel :

- la chambre de torréfaction dédiée (1a) de l'appareil de torréfaction de grains de café peut être retirée de l'appareil de torréfaction, et
- l'appareil de torréfaction de grains de café comprend une zone conçue pour recevoir et maintenir la chambre dédiée amovible, et
- l'au moins une seconde sonde de température (3) fait partie d'une chambre d'étalonnage (1b), ladite chambre d'étalonnage étant conçue pour être introduite à l'intérieur de la zone de maintien et de réception à la place de la chambre de torréfaction dédiée.

**11.** Système de torréfaction de grains de café selon la revendication 1, dans lequel l'appareil de torréfaction de grains de café (10) comprend :

- une chambre (1b) dédiée à l'étalonnage, ladite chambre d'étalonnage comprenant :

. l'au moins une seconde sonde de température (3),
. et éventuellement au moins un dispositif conçu pour restreindre le flux d'air pour simuler la présence de grains de café à l'intérieur de la chambre lors d'une opération de torréfaction, et
- un moyen pour guider le flux d'air chaud fourni par le dispositif de chauffage (2) soit à la chambre (1a) dédiée à la torréfaction des grains de café soit à la chambre (1b) dédiée à l'étalonnage.

**12.** Système de torréfaction de grains de café selon l'une quelconque des revendications précédentes, dans lequel le système de commande (80) de l'appareil de torréfaction est configuré :

- pour recevoir une entrée de température mesurée par ladite seconde sonde de température, et
- pour mettre en oeuvre un processus d'étalonnage de l'appareil de torréfaction (10) sur la base de ladite entrée.

**13.** Chambre d'étalonnage (1b) configurée pour être introduite à la place de la chambre de torréfaction (1a) d'un appareil de torréfaction de grains de café, ledit appareil de torréfaction de grains de café (10) comprenant :

. une chambre de torréfaction (1a) pour contenir des grains de café, ladite chambre étant amovible,
. un dispositif de chauffage (2) pour fournir un flux d'air chaud à la chambre,
. au moins une première sonde de température (5) pour réguler la température de l'air fourni par le dispositif de chauffage, ladite première sonde de température étant positionnée à l'extérieur de la chambre,
. un système de commande (80) configuré pour commander le dispositif de chauffage et configuré pour reproduire des courbes de torréfaction, chacune desdites courbes de torréfaction fournissant un ensemble de points ($T_{@ti}$ ; $t_i$) représentant la température à appliquer à des temps successifs discrets $t_i$, respectivement, ladite commande du dispositif de chauffage étant basée sur la température $T_{reg}$ régulée par l'au moins une première sonde de température,

ladite chambre d'étalonnage comprenant :

- au moins une seconde sonde de température (3).

**14.** Chambre d'étalonnage selon la revendication précédente, dans laquelle ladite chambre d'étalonnage comprend au moins un dispositif conçu pour restreindre le flux d'air chaud à l'intérieur de ladite chambre d'étalonnage, éventuellement ladite chambre d'étalonnage comprend :

- une première plaque (16a) percée de trous et positionnée au fond de la chambre d'étalonnage,
- une deuxième plaque (16c) percée de trous et positionnée en aval de l'au moins une seconde sonde de température (3), les trous étant conçus pour amener le flux d'air à converger vers l'au moins une seconde sonde de température,
- une troisième plaque (16b) percée de trous et positionnée entre la première plaque et l'au moins une seconde sonde de température.

**15.** Chambre d'étalonnage selon la revendication 13, dans laquelle ladite chambre d'étalonnage est un tube, ledit tube présentant une section transversale inférieure à la section transversale de la chambre de torréfaction de l'appareil de torréfaction, éventuellement ledit tube comprend :

- une première plaque (16a) percée d'au moins un trou et positionnée au fond de la chambre d'étalonnage, et/ou
- une deuxième plaque (16c) percée d'au moins un trou et positionnée en aval de l'au moins une seconde sonde de température (3).

**16.** Procédé d'étalonnage d'un appareil de torréfaction d'un système selon l'une quelconque des revendications 1 à 12, comprenant les étapes consistant à :

a - introduire temporairement l'au moins une seconde sonde de température (3) à l'intérieur de l'appareil de torréfaction,

b - lorsque la chambre ne contient pas de grains, commander le dispositif de chauffage pour reproduire une courbe prédéfinie $R_{set}$ ladite courbe prédéfinie fournissant une série de points ($T_{set@ti}$ ; $t_i$) représentant la température $T_{set@t1}$, $T_{set@t2}$, ... $T_{set@tfinal}$ à appliquer à des temps successifs correspondants prédéfinis t1, t2, ..., $t_{final}$ respectivement, ladite commande étant basée sur la température $T_{reg}$ mesurée par l'au moins une première sonde de température (5),

et créer une perte de pression du flux d'air chaud pour simuler la présence de grains de café à l'intérieur de la chambre lors de ladite reproduction de la courbe prédéterminée $R_{set}$,

c - pendant la reproduction de la courbe prédéfinie $R_{set}$, mesurer la température $T_{cal}$ en fonction du temps à l'intérieur de la chambre au niveau de l'au moins une seconde sonde de température permettant la détermination d'au moins un ensemble de points ($T_{cal@ti}$ ; $t_i$),

d - comparer la température $T_{cal@ti}$ mesurée à au moins un temps $t_i$ avec la température $T_{ref@ti}$ au même temps $t_i$ d'une courbe de référence prédéterminée $R_{ref}$ obtenue avec l'appareil de torréfaction maître (M), ladite courbe de référence $R_{ref}$ représentant la température $T_{ref}$ mesurée dans la chambre de l'appareil maître (M) spécifique tout en commandant le dispositif de chauffage de l'appareil maître pour reproduire ladite courbe prédéfinie $R_{set}$,

e - sur la base de cette comparaison, étalonner l'appareil de torréfaction (X) en appliquant une correction à la régulation de boucle de rétroaction, de préférence en appliquant une correction à la température $T_{reg}$ mesurée par la première sonde de température (5) ou en appliquant une correction aux températures $T_{@ti}$ fournies par les courbes de torréfaction à reproduire par l'appareil de torréfaction (X).

FIGURE 1

FIGURE 2A

FIGURE 2B

FIGURE 3A

FIGURE 3B

FIGURE 3C

FIGURE 4A

FIGURE 4B

FIGURE 4C

FIGURE 4D

FIGURE 5A

FIGURE 5B

FIGURE 5C

FIGURE 5D

FIGURE 6A

FIGURE 6B

1a

16

3

18

1b

$T_{Reg}$

5

**FIGURE 7A**

TCh

3

18

$T_{Reg}$

**FIGURE 7B**

14

6

10

12

1b

15

4

43

11

41

7

5

23

Tcal

Treg

22

2

21

8

Rset

42

**FIGURE 8**

62 database

63 memory unit ⎯Rref⟶

3 second temperature probe ⎯Tch⟶

5 first temperature probe ⎯Treg⟶

19 sensors

6 user interface

7 code reader

61 communication interface

8

80

processing unit

air flow driver 21

heater 22

2

9 power supply

FIGURE 9

FIGURE 10A

FIGURE 10B

FIGURE 10C

FIGURE 10D

FIGURE 11A

FIGURE 11B

FIGURE 11C

FIGURE 11D

Tset@ti → ×$Ki$ → $Ki$ ×$Tset@ti$ → (+/−) → PCU 8 ... heater 22 → AIR → first regulating probe at chamber inlet 5

Treg@ti

$$Ki = \prod_{n=1}^{i} \frac{Tref@Tref\ n}{Tcal@Terf\ n}$$

Tcal@tref i ← second measuring probe in chamber 3

Tref@tref i

FIGURE 12A

$$T_{set}@ti$$

PCU — 8

22 — heater — AIR

5 — first regulating probe at chamber inlet

$$+ \quad - $$

$$\frac{Treg@t1}{Ki}$$

$$\times 1/Ki$$

$$Treg@ti$$

$$Ki = \prod_{n=1}^{i} \frac{Tref@Tref\ n}{Tcal@Terf\ n}$$

$$Tcal@tref\ i$$

3 — second measuring probe in chamber

$$Tref@tref\ i$$

FIGURE 12B

FIGURE 13A

FIGURE 13B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6053093 A
- US 20060266229 A
- WO 2018021081 A
- US 6770315 B